# EUROPÄISCHE PATENTSCHRIFT

(11) **EP 2 090 037 B1**
(45) Veröffentlichungstag und Bekanntmachung des Hinweises auf die Patenterteilung: **12.10.2011**
(21) Anmeldenummer: 07822499.5
(22) Anmeldetag: 12.11.2007
(51) Int. Cl.: H04L 12/56

(54) **VERFAHREN ZUM EINRICHTEN BIDIREKTIONALER DATENÜBERTRAGUNGSPFADE IN EINEM DRAHTLOSEN VERMASCHTEN KOMMUNIKATIONSNETZWERK**
METHOD FOR ESTABLISHING BIDIRECTIONAL DATA TRANSMISSION PATHS IN A WIRELESS MESHED COMMUNICATION NETWORK
PROCÉDÉ D'IMPLANTATION DE CHEMINS BIDIRECTIONNELS DE TRANSMISSION DE DONNÉES DANS UN RÉSEAU MAILLÉ DE COMMUNICATION SANS FIL

(30) Priorität: 13.11.2006 DE 102006053409; 05.07.2007 DE 102007031341
(43) Veröffentlichungstag der Anmeldung: 19.08.2009
(73) Patentinhaber: SIEMENS AKTIENGESELLSCHAFT, 80333 München (DE)
(72) Erfinder: BAHR, Michael, 81827 München (DE); BUTTU, Andrea, Oxford OX1 SW (GB)
(86) Internationale Anmeldenummer: PCT/EP2007/062215
(87) Internationale Veröffentlichungsnummer: WO 2008/058933

(56) Entgegenhaltungen:
- IEEE 802.11 TGS: "Joint SEE-Mesh/Wi-Mesh Proposal to 802.11 TGs"[Online] 27. Februar 2006 (2006-02-27), Seiten 1-14,65-83, XP002469386 Gefunden im Internet: URL:https://mentor.ieee.org/802.11/file/06 /11-06-0328-00-000s-joint-seemesh-wimesh-p roposal-to-802-11-tgs.doc> [gefunden am 2008-02-15]
- MICHAEL BAHR: "Proposed Routing for IEEE 802.11s WLAN Mesh Networks"[Online] 5. August 2006 (2006-08-05), XP002469387 WICON '06, The 2nd Annual International Wireless Internet Conference, August 2-5, 2006, Boston, MA, USA Gefunden im Internet: URL:http://portal.acm.org/ft_gateway.cfm?i d=1234166&type=pdf> [gefunden am 2008-02-15]

## Beschreibung

Die Erfindung liegt auf dem technischen Gebiet der Nachrichtentechnik und betrifft ein Verfahren zum Einrichten bidirektionaler Datenübertragungspfade in einem drahtlosen vermaschten Kommunikationsnetzwerk. Die Erfindung betrifft weiterhin ein zur Durchführung des Verfahrens geeignetes drahtloses vermaschtes Kommunikationsnetzwerk.

Für drahtlose WLAN-Kommunikationsnetzwerke (WLAN = Wireless Local Area Network) sind seit Anfang der neunziger Jahre vom Institute of Electrical and Electronics Engineers (IEEE) im Rahmen der Standardfamilie IEEE 802.11 eine Vielzahl verschiedener Standards veröffentlicht worden, in denen auf Basis der rasant fortschreitenden technischen Entwicklung bestimmte Eigenschaften der Kommunikationsnetzwerke, wie Übertragungsraten, Frequenzbereiche, Modulationsverfahren, Kanalzahlen, Verschlüsselung und dergleichen verbindlich spezifiziert wurden.

In den bisherigen Standards ist die kleinste Einheit eines WLAN-Kommunikationssystems die Funkzelle, in der Zugangspunkte Daten mit mehreren Endgeräten austauschen können. Eine Verbindung mehrerer Funkzellen untereinander erfolgt über Kabelverbindungen zwischen den Zugangspunkten.

Eine jüngste Entwicklung innerhalb der Standardfamilie IEEE 802.11, welche als IEEE 802.11s bezeichnet und voraussichtlich im Jahre 2009 als geltender Standard veröffentlicht wird, standardisiert eine drahtlose Kommunikation zwischen den Netzknoten. In IEEE 802.11s dienen die Netzknoten, so genannte Mesh-Points, abgekürzt MP (MP = Mesh Point), als Router zur drahtlosen Datenübermittlung, wodurch ein drahtloses vermaschtes Ad-hoc-Funknetz (Mesh-Netzwerk) gebildet wird.

In Kommunikationsnetzwerken können generell proaktive, reaktive oder hybride Routingprotokolle implementiert sein.

In Kommunikationsnetzwerken mit einem proaktiven Routingprotokoll werden Datenübertragungspfade zwischen Quell- und Zielnetzknoten zur Datenübertragung bereit gehalten, was einen schnellen Datenaustausch ermöglicht, jedoch insbesondere den Nachteil hat, dass Ressourcen reserviert werden, die dann möglicher Weise nicht für einen Datenaustausch genutzt werden. Bei einem reaktiven Routingprotokoll wird ein Datenübertragungspfad zwischen Quell- und Zielnetzknoten erst bei Bedarf eingerichtet, was zwar hinsichtlich der Ressourcen vorteilhafter ist, jedoch mit einer Latenzzeit für den Aufbau des Datenübertragungspfads verbunden ist.

Um die Vorteile von proaktiven und reaktiven Routingprotokollen zu nutzen, ist für ein auf dem Standard IEEE 802.11s basierendes drahtloses Kommunikationsnetzwerk für die Wahl eines Datenübertragungspfads zwischen Quell- und Zielnetzknoten ein hybrides Routingprotokoll mit der Bezeichnung HWMP (HWMP = Hybrid Wireless Mesh Protocol) vorgesehen. In HWMP kann auf der physikalischen Topologie des Netzwerks eine logische Topologie in Form eines oder mehrerer Routingbäume eingerichtet werden. Zur Einrichtung und Aktualisierung eines Routingbaums versendet ein Root-MP in periodischen Zeitabständen Routing-Anfrage-Nachrichten im Broadcast-Verfahren an die anderen MPs, welche als "proaktive Path Requests", abgekürzt proaktive PREQ (PREQ = Path Request), bezeichnet werden. Die MPs empfangen die PREQs, tragen die entsprechenden Pfaddaten in ihre Routing-Tabellen ein und bauen auf diese Weise einen unidirektionalen Datenübertragungspfad vom MP zum sendenden Root-MP auf. Um die Zahl der Routing-Nachrichten zum Aufbau eines lokalen Routingbaums möglichst gering zu halten, kann im proaktiven PREQ ein so genanntes proaktives PREP-Flag für eine Routing-Antwort-Nachricht PREP (PREP = Path Reply) gelöscht werden, das heißt, die MPs empfangen die proaktiven PREQs, bauen einen Hinpfad zur Datenübermittlung vom MP an den Root-MP auf, senden jedoch keine Routing-Antwort-Nachricht (PREP) an den Root-MP, so dass keine Rückpfade zur Datenübertragung vom Root-MP zu den MPs eingerichtet werden.

In den Druckschriften IEEE 802.11 TGS: "Joint SEE-Mesh/Wi-Mesh Proposal to 802.11 TGs", [Online], 27. Februar 2006, Seiten 1 bis 14, 65 bis 83, XP002469386, sowie Michael Bahr: "Proposed Routing for IEEE 802.11s WLAN Mesh Networks",[Online], 5. August 2006, XP002469387 WICON '06, The 2nd Annual International Wireless Internet Conference, 2. bis 5. August 2006, Boston, MA, USA, wird auf das HWMP-Protokoll eingegangen. Insbesondere wird in den Druckschriften die Verwendung eines sog. HWMP-Registration Flags in einer Root-Annoucnement-Nachricht beschrieben. Über dieses Flag wird das Verhalten der die Root-Annoucement-Nachricht empfangenden Netzknoten des Routingbaums beeinflusst.

Da Datenströme zwischen einem Root-MP und den MPs eines Routingbaums häufig bidirektional sind, besteht in HWMP die Möglichkeit, zu Beginn einer Datenkommunikation, also noch vor dem Aussenden des ersten Datenpakets von einem MP zu einem Root-MP, eine Routing-Antwort-Nachricht (PREP) vom MP zum Root-MP zu senden, um auf diese Weise einen unidirektionalen Rückpfad vom Root-MP zu dem die PREP sendenden MP einzurichten.

Durch die von den Root-MPs periodisch ausgesendeten PREQs werden die unidirektionalen Datenübertragungspfade (Hinpfade) von den MPs zu den Root-MPs periodisch aktualisiert, so dass die unidirektionalen Hinpfade des Routingbaums an sich ändernde Bedingungen im Mesh-Netzwerk angepasst werden können.

Insbesondere können zum Mesh-Netzwerk neu hinzugekommene MPs in Routingbäume eingebunden werden oder beispielsweise durch Ausfall eines Datenlinks nicht mehr funktionsfähige Datenübertragungspfade geändert werden.

Da jedoch die Rückpfade von den Root-MPs zu den MPs nicht aktualisiert werden und so bleiben, wie sie vor dem Aussenden eines ersten Datenpakets einer Datenkommunikation durch Aussenden der PREP von einem MP eingerichtet wurden, kann der Fall eintreten, dass bei unveränderter Konnektivität und geänderten Link-Metriken Hin- und Rückpfade zwischen einem Root-MP und einem MP verschieden sind, so dass die Datenpakete auf dem Hinpfad den (aktualisierten) günstigeren Weg nehmen und auf dem Rückpfad den (nicht aktualisierten) weniger günstigen Weg nehmen. Fällt ein Datenlink in einem Datenübertragungspfad zwischen einem Root-MP und einem MP aus, so wird durch die periodisch ausgesendeten PREQs ein alternativer Hinpfad zwischen dem Root-MP und dem MP eingerichtet, wohingegen eine Datenübertragung über den nicht aktualisierten Rückpfad nicht mehr möglich ist. In diesem Fall wird in HWMP auf AODV (AODV = Ad hoc On demand Distance Vector) basierende Standardmechanismen zurückgegriffen, was mit einer relativ hohen Latenzzeit bis zum Beginn der Übertragung von Datenpaketen vom Root-MP zum MP verbunden ist.

Demgegenüber besteht die Aufgabe der vorliegenden Erfindung darin, ein Verfahren zum Einrichten bidirektionaler Datenübertragungspfade in einem drahtlosen vermaschten Kommunikationsnetzwerk zur Verfügung zu stellen, mit dem die obig aufgezeigten Nachteile vermieden werden können.

Diese Aufgabe wird erfindungsgemäß durch ein Verfahren zum Einrichten bidirektionaler Datenübertragungspfade in einem drahtlosen vermaschten Kommunikationsnetzwerk mit den Merkmalen von Patentanspruch 1 gelöst. Vorteilhafte Ausgestaltungen der Erfindung sind durch die Merkmale der Unteransprüche angegeben.

Erfindungsgemäß ist ein Verfahren zum Einrichten eines bidirektionalen Datenübertragungspfads in einem drahtlosen vermaschten paketvermittelten (Ad-hoc-)Kommunikationsnetzwerk gezeigt, auf dessen physikalischer Topologie eine logische Topologie mit wenigstens einer baumartigen Struktur ("Routingbaum") proaktiv eingerichtet wird bzw. eingerichtet ist. Zu diesem Zweck generiert und sendet ein für den Routingbaum als Root-Netzknoten dienender Netzknoten des Kommunikationsnetzwerks in periodischen Zeitabständen Routing-Anfrage-Nachrichten, abgekürzt RANs (RAN = Routing-Anfrage-Nachricht), an die Netzknoten des Kommunikationsnetzwerks, um erste unidirektionale Datenübertragungspfade zum Root-Netzknoten zu setzen. Dazu kann bei Empfang der RAN durch einen Netzknoten ein Eintrag in einer Routing-Tabelle (Forwarding-Tabelle) des die RAN empfangenden Netzknotens des Netzwerks für den Ziel-Netzknoten (Root-Netzknoten) angelegt oder aktualisiert werden, welcher die Pfadmetrik und den nächsten Hop (das heißt, nächster Netzknoten auf dem Pfad zum Ziel-Netzknoten, welcher der Netzknoten ist, von dem die RAN erhalten wurde) zum Ziel-Netzknoten enthält. Zudem kann beispielsweise auch ein Hop-Count in den Routing-Tabellen abgelegt werden. Das Verfahren zum Einrichten des Routingbaums kann insbesondere auf Prozeduren basieren, die im hybriden Routingprotokoll HWMP implementiert sind. Insbesondere können die Routing-Anfrage-Nachrichten (RANs) proaktive Path Requests (PREQs) gemäß dem hybriden Routingprotokoll HWMP sein.

In den Netzknoten des Routingbaums ist ein in zwei verschiedene Zustände versetzbares erstes Flag zum Steuern des Aussendens einer Routing-Antwort-Nachricht eingerichtet. Das erste Flag eines Netzknotens des Routingbaums wird dabei nur dann in einen wählbaren ersten Zustand versetzt, wenn der Netzknoten als erster Netzknoten ("Quell-Netzknoten") des Kommunikationsnetzwerks auf dem Datenübertragungspfad zum Root-Netzknoten ein Datenpaket zur Übertragung an den Root-Netzknoten ("Ziel-Netzknoten") erhält. Der Netzknoten erhält das Datenpaket in diesem Fall aus einer Schicht (OSI-Modell), welche höher ist als die Schicht, innerhalb derer die Übertragung von Datenpaketen innerhalb des Kommunikationsnetzwerks erfolgt.

Wenn das erste Flag eines Netzknotens des Routingbaums in den ersten Zustand versetzt ist, generiert dieser Netzknoten bei Empfang einer Routing-Anfrage-Nachricht (RAN) vom Root-Netzknoten eine Routing-Antwort-Nachricht, abgekürzt RWN (RWN = Routing-Antwort-Nachricht) und sendet diese über die im ersten unidirektionalen Datenübertragungspfad enthaltenen Netzknoten an den Root-Netzknoten. Wenn das erste Flag eines Netzknotens des Routingbaums in seinen zweiten Zustand versetzt ist, generiert dieser Netzknoten bei Empfang einer RAN vom Root-Netzknoten keine RWN. Durch die RWN wird ein zweiter unidirektionaler Datenübertragungspfad vom Root-Netzknoten zu dem die RWN generierenden Netzknoten gesetzt. Dazu kann bei Empfang der RWN durch einen Netzknoten ein Eintrag in einer Routing-Tabelle (Forwarding-Tabelle) für den Netzknoten, welcher die RWN generiert hat, angelegt oder aktualisiert werden, welcher die Pfadmetrik und den nächsten Hop (das heißt, nächster Netzknoten auf dem Pfad zum Netznoten, der die RWN generiert hat, welcher der Netzknoten ist, von dem die RWN erhalten wurde) auf dem Weg zu dem Netzknoten, der die RWN generiert hat, enthält. Zudem kann ein Hop-Count in den Routing-Tabellen abgelegt werden. Insbesondere kann die Routing-Antwort-Nachricht (RWN) eine Path Reply (PREP) gemäß dem hybriden Routingprotokoll HWMP sein. Der Root-Netzknoten empfängt die Routing-Antwort-Nachricht (RWN) und erstellt den zweiten unidirektionalen Datenübertragungspfad vom Root-Netzknoten zu dem Netzknoten, der die RWN generiert hat, wodurch ein bidirektionaler Datenübertragungspfad zwischen dem Root-Netzknoten und diesem Netzknoten, der die RWN generiert hat, eingerichtet wird.

Innerhalb des Kommmunikationsnetzwerks werden Datenpakete von einem Netzknoten zu einem anderen Netzknoten in einer selben Schicht (OSI-Modell) übertragen. Dies kann insbesondere Schicht 2 oder Schicht 3 sein.

Durch das erfindungsgemäße Verfahren wird in vorteilhafter Weise lediglich dann ein bidirektionaler Datenübertragungspfad zwischen einem Root-Netzknoten und einem Netzknoten des Routingbaums eingerichtet, wenn tatsächlich Datenpakete auf dem Datenübertragungspfad transportiert werden, so dass die Anzahl der Routing-Nachrichten relativ niedrig ist. Zudem wird neben dem Hinpfad vom Netzknoten zum Root-Netzknoten auch der Rückpfad vom Root-Netzknoten zum Netzknoten aktualisiert, so dass ein aktualisierter bidirektionaler Datenübertragungspfad zwischen Root-Netzknoten und Netzknoten für eine Übertragung von Datenpaketen zur Verfügung steht und auf Änderungen im Datenübertragungspfad, sei es durch eine Änderung der Pfadmetrik oder sei es durch Ausfall eines Datenlinks, schnell reagiert werden kann.

In seinem ersten Zustand ist das erste Flag beispielsweise "gesetzt", also in einen Zustand "ON" bzw. "1" versetzt, während es in seinem zweiten Zustand "gelöscht" ist, also in einen Zustand "OFF" bzw. "0" versetzt ist. Gleichermaßen ist es möglich, dass das erste Flag in seinem ersten Zustand in den Zustand "OFF" versetzt wird, während es in seinem zweiten Zustand in seinen Zustand "ON" versetzt wird.

Bei einer weiteren vorteilhaften Ausgestaltung des erfindungsgemäßen Verfahrens wird das erste Flag eines Netzknotens unmittelbar nach dem Senden einer Routing-Antwort-Nachricht (RWN) an den Root-Netzknoten in seinen zweiten Zustand versetzt, was den Vorteil hat, dass sich diese Vorgehensweise an den Abläufen des Routing-Protokolls orientiert. Zudem wird kein Timer benötigt.

Bei einer weiteren vorteilhaften Ausgestaltung des erfindungsgemäßen Verfahrens wird das erste Flag eines Netzknotens erst nach Ablauf einer wählbaren ersten Zeitspanne in den zweiten Zustand versetzt, die mit dem Aussenden eines Datenpakets an den Root-Netzknoten als Ziel-Netzknoten, für das der Netzknoten ein Quell-Netzknoten ist, (das der Netzknoten als erster Netzknoten des Kommunikationsnetzwerks auf dem Datenübertragungspfad zum Root-Netzknoten erhalten hat), gestartet wird, wobei die erste Zeitspanne bei jedem Aussenden eines solchen Datenpakets, für das der Netzknoten ein Quell-Netzknoten mit dem Root-Netzknoten als Ziel-Netzknoten ist, auf einen Startwert der wählbaren Zeitspanne rückgestellt wird. Diese Ausgestaltung des erfindungsgemäßen Verfahrens kann in besonders einfacher Weise implementiert werden.

Bei einer weiteren vorteilhaften Ausgestaltung des erfindungsgemäßen Verfahrens generiert und sendet ein Netzknoten eine Routing-Antwort-Nachricht (RWN) an den Root-Netzknoten, wenn der Netzknoten als Quell-Netzknoten ein Datenpaket empfängt (das der Netzknoten als erster Netzknoten des Kommunikationsnetzwerks auf dem Datenübertragungspfad zum Root-Netzknoten zum Senden an den Root-Netzknoten erhalten hat) und für eine dem Empfang des Datenpakets unmittelbar vorausgehende gewisse zweite Zeitspanne kein Datenpaket als Quell-Netzknoten (das heißt, kein Datenpaket zum Senden an den Root-Netzknoten als erster Netzknoten des Kommunikationsnetzwerks auf dem Datenübertragungspfad zum Root-Netzknoten) erhalten hat. Hierdurch kann in vorteilhafter Weise bei jeder beginnenden Datenkommunikation ein bidirektionaler Datenübertragungspfad zwischen dem Root-Netzknoten und diesem Netzknoten eingerichtet werden.

Insbesondere in der letztgenannten Ausgestaltung des erfindungsgemäßen Verfahrens kann ein Netzknoten eine Routing-Antwort-Nachricht (RWN) generieren und an den Root-Netzknoten senden, wenn ein im Netzknoten eingerichtetes, in zwei verschiedene Zustände versetzbares, zweites Flag in einen wählbaren zweiten Zustand versetzt ist. Dies ermöglicht eine besonders einfache Realisierung des erfindungsgemäßen Verfahrens.

In seinem ersten Zustand ist das zweite Flag beispielsweise "gesetzt", also in einen Zustand "ON" bzw. "1" versetzt, während es in seinem zweiten Zustand "gelöscht" ist, also in einen Zustand "OFF" bzw. "0" versetzt ist. Gleichermaßen ist es möglich, dass das zweite Flag in seinem ersten Zustand in den Zustand "OFF" versetzt wird, während es in seinem zweiten Zustand in seinen Zustand "ON" versetzt wird.

Bei einer weiteren Ausgestaltung des erfindungsgemäßen Verfahrens kann für den Fall, dass ein Datenpaket ein erstes Datenpaket einer Datenkommunikation ist, was beispielsweise dadurch erkannt werden kann, dass das zweite Flag in seinen zweiten Zustand versetzt ist, das erste Flag eines Netzknotens in den ersten Zustand versetzt werden, wenn der Netzknoten eine Routing-Antwort-Nachricht (RWN) an den Root-Netzknoten vor dem ersten Datenpaket (D1) einer Datenkommunikation sendet. Die führt jedoch dazu, dass eine zusätzliche Bedingung abgefragt werden muss.

Bei einer weiteren Ausgestaltung des erfindungsgemäßen Verfahrens wird die Routing-Antwort-Nachricht (RWN) unmittelbar nach Empfang der Routing-Anfrage-Nachricht (RAN) an den Root-Netzknoten gesendet. Bei einer hierzu alternativen Ausgestaltung des erfindungsgemäßen Verfahrens wird die Routing-Antwort-Nachricht (RWN) mit einer zeitlichen Verzögerung nach Empfang der Routing-Anfrage-Nachricht (RAN) an den Root-Netzknoten (R) gesendet. Die letztgenannte Alternative ist erfindungsgemäß bevorzugt, weil sie den Vorteil hat, dass die Anzahl der Routing-Nachrichten vermindert werden kann, da die Wahrscheinlichkeit für den Empfang von weiteren Routing-Anfrage-Nachrichten (RANs) besserer Pfadmetrik nach dem Senden der RWN vermindert ist.

Bei einer weiteren vorteilhaften Ausgestaltung des erfindungsgemäßen Verfahrens wird ein die Lebenszeit eines zweiten unidirektionalen Datenübertragungspfads zu einem Netzknoten kodierender Lifetime-Parameter einer Routing-Antwort-Nachricht (RWN) auf einen in der empfangenen Routing-Anfrage-Nachricht (RAN) enthaltenen, die Lebenszeit eines ersten unidirektionalen Datenübertragungspfads zum Root-Netzknoten (R) kodierenden Lifetime-Parameter eingestellt. Hierdurch kann in vorteilhafter Weise erreicht werden, dass die Lebenszeiten von Hin- und Rückpfad eines bidirektionalen Datenübertragungspfads zwischen dem Root-Netzknoten und einem Netzknoten gleich sind.

Die Erfindung betrifft weiterhin ein Verfahren zum Einrichten eines bidirektionalen Datenübertragungspfads in einem wie oben beschriebenen drahtlosen vermaschten paketvermittelten Kommunikationsnetzwerk, welches insbesondere mit dem oben beschriebenen Verfahren kombinierbar ist. In diesem Verfahren wird in den Netzknoten des Routingbaums jeweils ein in zwei verschiedene Zustände versetzbares erstes Flag zum Steuern des Sendens einer Routing-Antwort-Nachricht eingerichtet, wobei das erste Flag eines Netzknotens nur dann in einen wählbaren ersten Zustand versetzt wird, wenn der Netzknoten als erster Netzknoten des Kommunikationsnetzwerks auf dem Übertragungspfad zum Root-Netzknoten ein Datenpaket zur Übertragung an den Root-Netzknoten enthält. Wenn das erste Flag in den ersten Zustand versetzt ist, wird in diesem Verfahren bei einer erfassten Änderung eines ersten unidirektionalen Datenübertragungspfads zum Root-Netzknoten eine, einen zweiten unidirektionalen Datenübertragungspfad zum Netzknoten spezifizierende Routing-Antwort-Nachricht (RWN) an den Root-Netzknoten gesendet, wodurch ein bidirektionaler Datenübertragungspfad zwischen dem Root-Netzknoten und dem Netzknoten eingerichtet wird.

Die Erfindung erstreckt sich weiterhin auf ein wie oben beschriebenes drahtloses vermaschtes paketvermitteltes (Ad-hoc-)Kommunikationsnetzwerk, welches so eingerichtet ist, dass es ein wie oben beschriebenes Verfahren ausführen kann.

Des Weiteren erstreckt sich die Erfindung auf einen Netzknoten eines wie oben beschriebenen drahtlosen vermaschten paketvermittelten (Ad-hoc-)Kommunikationsnetzwerkes, auf dem ein wie oben beschriebener maschinenlesbarer Programmcode ausgeführt wird.

Weiterhin erstreckt sich die Erfindung auf ein Speichermedium mit einem darauf gespeicherten, wie oben beschriebenen, maschinenlesbaren Programmcode.

Die Erfindung wird nun anhand von Ausführungsbeispielen näher erläutert, wobei Bezug auf die beigefügten Zeichnungen genommen wird.
- Fig. 1: veranschaulicht in einem schematischen Diagramm ein Ausführungsbeispiel des erfindungsgemäßen drahtlo- sen vermaschten Kommunikationsnetzwerks mit einge- richtetem Routingbaum;
- Fig. 2: veranschaulicht in einem schematischen Diagramm die Weiterleitung von Datenpaketen D1 als Quell-Netz- knoten und die Weiterleitung von Datenpaketen D2 als Nicht-Quell-Netzknoten in dem Kommunikations- netzwerk von Fig. 1;
- Fig. 3: veranschaulicht in einem schematischen Diagramm ein Ausführungsbeispiel des erfindungsgemäßen Verfah- rens, welches auf einem Netzknoten in dem Kommuni- kationsnetzwerk von Fig. 1 ausgeführt wird;
- Fig. 4: veranschaulicht in einem schematischen Diagramm ein weiteres Ausführungsbeispiel des erfindungsgemäßen Verfahrens, welches auf einem Netzknoten in dem Kommunikationsnetzwerk von Fig. 1 ausgeführt wird.

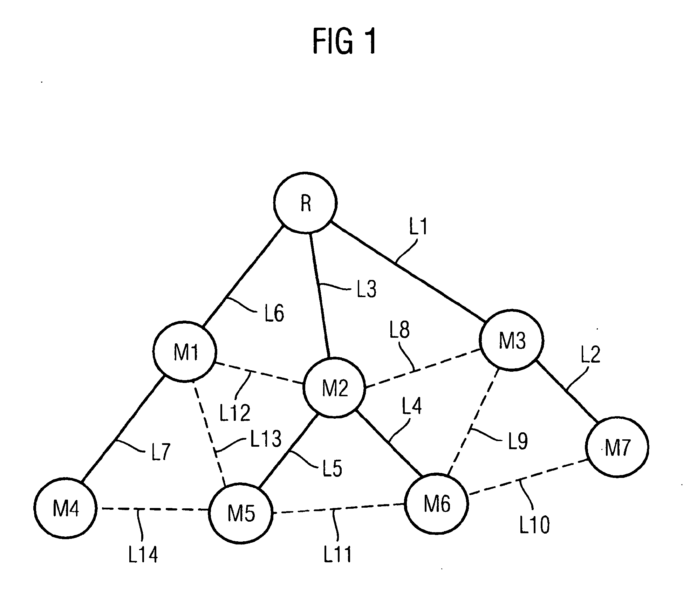

In Fig. 1 ist ein Ausführungsbeispiel des erfindungsgemäßen drahtlosen vermaschten paketvermittelten Ad-hoc-Kommunikationsnetzwerks (Mesh-Netzwerk) gezeigt. Das Mesh-Netzwerk umfasst eine Mehrzahl - hier beispielhaft acht - Netzknoten (Mesh Points) R, M1, M2, ..., M7, die über 14 drahtlose physikalische Punkt-zu-Punkt Datenlinks L1, L2, ..., L14 maschenförmig miteinander verbunden sind. So ist beispielsweise der Root-Netzknoten R über einen ersten Datenlink L1 mit dem dritten Netzknoten M3, über einen dritten Datenlink L3 mit dem zweiten Netzknoten M2 und über einen sechsten Datenlink L6 mit dem ersten Netzknoten M1 datentechnisch drahtlos verbunden.

Weiterhin ist beispielsweise der zweite Netzknoten M2 über einen achten Datenlink L8 mit dem dritten Netzknoten M3 datentechnisch verbunden. Alle weiteren Angaben zu den Datenlinks und den Netzknoten sind in analoger Weise zu verstehen.

In dem Mesh-Netzwerk von Fig. 1 ist ein proaktiver Routingbaum vom Root-Netzknoten R als Wurzelknoten zu allen Netzknoten M1, M2, ..., M7 eingerichtet, wobei die zum Routingbaum gehörenden Datenlinks, nämlich der erste Datenlink L1, der dritte Datenlink L3, der sechste Datenlink L6, der zweite Datenlink L2, der vierte Datenlink L4, der fünfte Datenlink L5 und der siebte Datenlink L7, in Fig. 1 mit durchgezogenen, fetten Linien eingezeichnet sind, während die nicht zum Routingbaum gehörenden übrigen Datenlinks mit unterbrochenen, dünnen Linien eingezeichnet sind.

Die Einrichtung des Routingbaums basiert auf Standardmechanismen unter Verwendung von Distanzvektoren und Link-State-Protokollen, wie sie im Routingprotokoll HWMP des Standards IEEE 802.11s vorgesehen sind. So sendet der Root-Netzknoten R periodisch Routing-Anfrage-Nachrichten (RANs) im Broadcast-Verfahren an alle Netzknoten M1, M2, ..., M7 des Kommunikationsnetzwerks, welche den Datenübertragungspfad zum Root-Netzknoten spezifizieren und zur Aktualisierung der Routing-Tabellen der Netzknoten M1, M2, ..., M7 dienen. Hierdurch werden jeweils unidirektionale Datenübertragungspfade zur Übertragung von Nutz-Datenpaketen von den Netzknoten M1, M2, ..., M7 zum Root-Netzknoten R eingerichtet. So ist beispielsweise ein unidirektionaler Datenübertragungspfad vom siebten Netzknoten M7 über den zweiten Datenlink L2 und den ersten Datenlink L1, unter Zwischenschaltung des dritten Netzknotens M3, zum Root-Netzknoten R proaktiv eingerichtet. Weiterhin ist beispielsweise ein unidirektionaler Datenübertragungspfad vom fünften Netzknoten M5 über den fünften Datenlink L5 und den dritten Datenlink L3, unter Zwischenschaltung des zweiten Netzknotens M2, zum Root-Netzknoten R proaktiv eingerichtet. Alle weiteren proaktiv eingerichteten unidirektionalen Datenübertragungspfade von den Netzknoten M1, M2, ..., M7 zum Root-Netzknoten R sind in entsprechender Weise zu verstehen.

In den Netzknoten M1, M2, ..., M7 ist als erstes Flag jeweils ein RWN-Antwort-Flag eingerichtet, das gesetzt ("1") oder gelöscht ("0") sein kann.

In den Netzknoten M1, M2, ..., M7 ist weiterhin als zweites Flag jeweils ein RWN-Gesendet-Flag eingerichtet, das gesetzt ("1") oder gelöscht ("0") sein kann.

Falls in einem Netzknoten M1, M2, ..., M7 das RWN-Antwort-Flag gesetzt ist und dieser Netzknoten eine periodisch ausgesendete RAN vom Root-Netzknoten R erhält, so sendet dieser Netzknoten eine Antwort-Nachricht (RWN) an den Root-Netzknoten R, um den Rückpfad zur Übertragung von (Nutz-)Datenpaketen vom Root-Netzknoten R zu diesem Netzknoten einzurichten. Falls in einem Netzknoten M1, M2, ..., M7 das RWN-Antwort-Flag gesetzt ist und dieser Netzknoten erfasst, beispielsweise durch eine einen ausgefallenen Datenlink kennzeichnende Fehler-Nachricht, dass sich der Datenübertragungspfad von diesem Netzknoten zum Root-Netzknoten geändert hat, so sendet dieser Netzknoten auch in diesem Fall eine Antwort-Nachricht RWN an den Root-Netzknoten R, um den Rückpfad zur Übertragung von (Nutz-)Datenpaketen vom Root-Netzknoten R zu diesem Netzknoten einzurichten. Die RWNs sind Nachrichten von der Art, wie sie im Routingprotokoll HWMP des Standards IEEE 802.11s vorgesehen sind (PREPs), dort jedoch nur vor dem Beginn einer Datenkommunikation, das heißt vor dem Aussenden des ersten Datenpakets, ausgesendet werden.

Für das Setzen oder Löschen des RWN-Antwort-Flags in einem Netzknoten M1, M2, ..., M7 ist wesentlich, ob ein Netzknoten M1, M2, ..., M7 Datenpakete von einer höheren Schicht oberhalb der zur Übertragung von Datenpaketen innerhalb des Kommunikationsnetzwerks zwischen den Netzknoten eingesetzten drahtlosen Mesh-Netzwerkschicht empfängt oder ob ein Netzknoten Datenpakete lediglich von einem anderen Netzknoten empfängt.

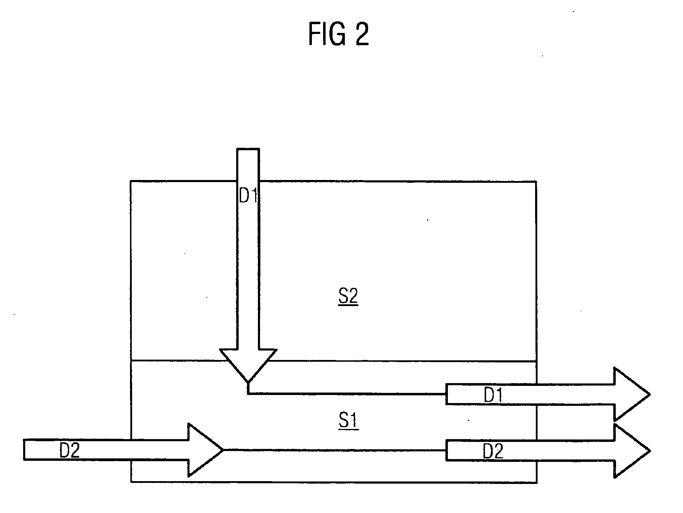

Dies wird unter Bezugnahme auf Fig. 2 näher erläutert. In Fig. 2 sind die Datenpakete, für welche ein Netzknoten ein Quell-Netzknoten ist, als Datenpakete "D1" bezeichnet, während Datenpakete, für welche ein Netzknoten kein Quell-Netzknoten ist, als Datenpakete "D2" bezeichnet werden. Die Datenpakete D1 stammen aus höheren Schichten (OSI-Modell), wie Applikationen, Internet-Protokoll-Schicht oder IEEE 802.1D-Bridging, welche in Fig. 2 insgesamt mit S2 bezeichnet sind, und werden, wie in Fig. 2 durch den nach unten gerichteten Pfeil angedeutet ist, in die drahtlose Mesh-Schicht, welche der Datenübertragung innerhalb des Mesh-Netzwerks dient und in Fig. 2 mit S1 bezeichnet ist, transferiert und dann zwischen den Netzknoten übertragen. Im Unterschied hierzu, werden Datenpakete D2 innerhalb der drahtlosen Mesh-Schicht S1 von einem Netzknoten zu einem anderen Netzknoten übertragen. Ein selber Netzknoten kann somit für Datenpakete D1 ein Quell-Netzknoten und für Datenpakete D2 kein Quell-Netzknoten sein. Ein Ziel-Netzknoten leitet die Datenpakete D2 in eine der höheren Schichten S2 weiter, was in Fig. 2 nicht näher dargestellt ist. Lediglich Netzknoten, welche Datenpakete D1 aus den höheren Schichten S2 erhalten, sind Quell-Netzknoten und setzen und löschen das RWN-Antwort-Flag. Netzknoten, welche keine Datenpakete D1 aus den höheren Schichten S2 erhalten, sind keine Quell-Netzknoten und setzen und löschen das RWN-Antwort-Flag nicht.

Während der Initialisierung des drahtlosen vermaschten Kommunikationsnetzwerks werden alle RWN-Antwort-Flags der Netzknoten M1, M2, ... M7 (voreingestellt) gelöscht (0). Ebenso werden während der Initialisierung des drahtlosen vermaschten Kommunikationsnetzwerks alle RWN-Gesendet-Flags der Netzknoten M1, M2, ... M7 (voreingestellt) gelöscht (0).

Der Root-Netzknoten R flutet periodisch das Mesh-Netzwerk mit RANs, so dass jeder Netzknoten nach Empfang einer RAN einen entsprechenden Datenübertragungspfad zum Root-Netzknoten R in seine Routing-Tabelle eintragen kann. Wenn ein Netzknoten eine RAN empfängt, wird ein Eintrag in einer Routing-Tabelle (Forwarding-Tabelle) des die RAN empfangenden Netzknotens des Netzwerks für den Ziel-Netzknoten (Root-Netzknoten) angelegt oder aktualisiert, welcher die Pfadmetrik und den nächsten Hop zum Ziel-Netzknoten, das heißt den nächsten Netzknoten auf dem Pfad zum Ziel-Netzknoten, enthält. Zudem kann ein Hop-Count in den Routing-Tabellen abgelegt werden. Das Verfahren zum Einrichten des Routingbaums basiert auf Prozeduren, die im hybriden Routingprotokoll HWMP implementiert sind, wobei die Routing-Anfrage-Nachrichten (RANs) proaktive Path Requests (PREQs) gemäß dem hybriden Routingprotokoll HWMP sind. Dieser Verfahrensschritt wird von allen Netzknoten unabhängig davon, ob sie Quell-Netzknoten sind oder nicht, durchgeführt.

Im Folgenden sei beispielhaft angenommen, dass der fünfte Netzknoten M5 Datenpakete D1 von einer höheren Schicht S2 erhält und somit als Quell-Netzknoten dient.

Empfängt der fünfte Netzknoten M5 eine periodisch ausgesandte Anfrage-Nachricht RAN vom Root-Netzknoten R, trägt der fünfte Netzknoten M5 den mit dieser RAN spezifizierten Datenübertragungspfad in seine Routing-Tabelle ein bzw. überschreibt den bisherigen Eintrag und aktualisiert somit periodisch seinen unidirektionalen Datenübertragungspfad zum Root-Netzknoten R.

Bei einer Anfrage für das Aussenden von Datenpaketen D1 an den Root-Netzknoten R, also noch vor dem Aussenden des ersten Datenpakets einer Datenkommunikation, generiert und sendet der fünfte Netzknoten M5 eine Routing-Antwort-Nachricht RWN an den Root-Netzknoten R. Der Root-Netzknoten R empfängt diese RWN und trägt den entsprechenden Datenübertragungspfad zum fünften Netzknoten M5 in seine Routing-Tabelle ein, um so einen unidirektionalen Datenübertragungspfad (Rückpfad) vom Root-Netzknoten zum fünften Netzknoten M5 und somit einen bidirektionalen Datenübertragungspfad zwischen dem Root-Netzknoten R und dem fünften Netzknoten M5 einzurichten.

Alle Datenpakete, die innerhalb einer bestimmten Zeitspanne nach dem letzten Datenpaket D1 von dem fünften Netzknoten M5 gesendet werden, werden als "weitere" Datenpakete betrachtet. Sendet der fünfte Netzknoten M5 während der genannten Zeitspanne kein Datenpaket D1, wird jedes anschließend, nach Ablauf dieser Zeitspanne, gesendete Datenpaket als "erstes" Datenpaket betrachtet. Durch diese vorgebbare Zeitspanne werden verschiedene "Datenkommunikationen" unterschieden.

Der fünfte Netzknoten M5 kann durch den Zustand seines RWN-Gesendet-Flags feststellen, ob ein Datenpaket D1 ein "erstes" Datenpaket oder ein weiteres Datenpaket einer selben Datenkommunikation ist. Das RWN-Gesendet-Flag wird gesetzt, das heißt auf ON/1 versetzt, wenn entweder eine RWN vor dem ersten Datenpaket D1 oder eine RWN in Antwort auf eine erhaltene RAN bei gesetztem RWN-Antwort-Flag geschickt wird: Das RWN-Gesendet-Flag wird mit jeder erhaltenen RAN, das bei gesetztem RWN-Antwort-Flag eine RWN losschicken würde, gelöscht, das heißt auf OFF/0 gesetzt.

Hierdurch kann zudem sichergestellt werden, dass das RWN-Gesendet-Flag nicht dann versehentlich gelöscht wird, wenn eine zweite RAN des aktuellen Root-Announcements erhalten wird (gleiche Sequenznummer bzw. Kennung), aufgrund dieser aber keine RWN an den Root-Netzknoten geschickt wird, da die Pfadmetrik der zweiten RAN schlechter ist als die Pfadmetrik der ersten RAN.Das RWN-Gesendet-Flag darf jetzt nicht zurückgesetzt werden, da sonst eine weitere RWN vor dem nächsten Datenpaket D1 geschickt werden würde.

Es ist vorteilhaft, nur dann das RWN-Gesendet-Flag zu löschen, wenn das RWN-Antwort-Flag gelöscht ist. Dadurch wird keine zusätzliche RWN gesendet, wenn ein Datenpaket D1 zwischen RAN und dazugehöriger RWN gesendet werden soll.

Ein Datenpaket D1 wird dann als erstes Datenpaket betrachtet, wenn in dem fünften Netzknoten M5 das RWN-Gesendet-Flag gelöscht ist, wohingegen ein Datenpaket D1 als weiteres Datenpaket betrachtet wird, wenn in dem fünften Netzknoten M5 das RWN-Gesendet-Flag gesetzt ist.

Bei einer ersten Flag-Setz-Variante des erfindungsgemäßen Verfahrens wird, falls eine Antwort-Nachricht RWN zum Root-Netzknoten R aufgrund eines ersten Datenpakets D1 gesendet wird, das RWN-Antwort-Flag des fünften Netzknotens M5 gesetzt.

Bei einer gegenüber der erste Flag-Setz-Variante bevorzugten zweiten Flag-Setz-Variante des erfindungsgemäßen Verfahrens, wird das RWN-Antwort-Flag des fünften Netzknotens M5 erst beim Senden eines Datenpakets D1 vom fünften Netzknoten M5 zum Root-Netzknoten R gesetzt. Die zweite Flag-Setz-Variante ist vorteilhaft gegenüber der ersten Flag-Setz-Variante, da es nicht erforderlich ist, eine weitere Bedingung abzufragen, wodurch die Implementierung erleichtert ist.

Empfängt der fünfte Netzknoten M5 eine periodisch ausgesandte Routing-Anfrage-Nachricht RAN vom Root-Netzknoten R, trägt der fünfte Netzknoten M5 den mit dieser RAN spezifizierten Datenübertragungspfad in seine Routing-Tabelle ein bzw. überschreibt den bisherigen Eintrag und aktualisiert somit seinen Datenübertragungspfad zum Rot-Netzknoten R. Ist das RWN-Antwort-Flag gesetzt, sendet der fünfte Netzknoten M5 zudem eine Antwort-Nachricht RWN an den Root-Netzknoten R. Der Root-Netzknoten R empfängt die RWN und trägt den mit dieser RWN spezifizierten Datenübertragungspfad zum fünften Netzknoten M5 in seine Routing-Tabelle ein bzw. überschreibt den bisherigen Eintrag, um so einen unidirektionalen Datenübertragungspfad (Rückpfad) vom Root-Netzknoten zum fünften Netzknoten M5 einzurichten bzw. zu aktualisieren, und auf diese Weise einen bidirektionalen Datenübertragungspfad zwischen dem Root-Netzknoten und dem fünften Netzknoten M5 einzurichten.

Der Root-Netzknoten R sendet periodische Anfrage-Nachrichten RANs im Broadcast-Verfahren an die Netzknoten M1, M2, ..., M7. Dies bedeutet, dass jeder Netzknoten M1, M2, ..., M7 eine selbe Routing-Anfrage-Nachricht auch mehrmals erhalten kann, wobei jede Routing-Anfrage-Nachricht einen anderen Datenübertragungspfad zum Root-Netzknoten R mit einer gegebenenfalls anderen Pfadmetrik spezifiziert. Anhand einer Kennung bzw. Sequenznummer kann jeder Netzknoten M1, M2, ..., M7 die periodisch vom Root-Netzknoten R gesendeten verschiedenen Routing-Anfrage-Nachrichten (RANs) unterscheiden.

Empfängt der fünfte Netzknoten M5 eine Routing-Anfrage-Nachricht RAN vom Root-Netzknoten R und ist das RWN-Antwort-Flag gesetzt, kann der fünfte Netzknoten M5 gemäß einer ersten RWN-Sende-Variante des erfindungsgemäßen Verfahrens sofort eine Routing-Antwort-Nachricht RWN an den Root-Netzknoten R senden. Empfängt der fünfte Netzknoten M5 weitere Routing-Anfrage-Nachrichten RANs mit gleicher Sequenznummer bzw. Kennung vom Root-Netzknoten R, sendet der fünfte Netzknoten M5 für jede RAN mit einer besseren Pfadmetrik zum Root-Netzknoten R wiederum sofort eine Routing-Antwort-Nachricht RWN an den Root-Netzknoten R. Dies bedeutet, dass so lange Routing-Antwort-Nachrichten RWN vom fünften Netzknoten M5 zum Root-Netzknoten R gesendet werden, bis keine Routing-Anfrage-Nachrichten mit besserer Pfadmetrik mehr erhalten werden.

Empfängt der fünfte Netzknoten M5 eine periodisch ausgesandte Routing-Anfrage-Nachricht RAN vom Root-Netzknoten R und ist das RWN-Antwort-Flag gesetzt, sendet der fünfte Netzknoten M5 gemäß einer bevorzugten zweiten RWN-Sende-Variante des erfindungsgemäßen Verfahrens erst nach einer wählbaren Wartezeit nach Empfang der RAN eine Routing-Antwort-Nachricht RWN an den Root-Netzknoten R. Alle während dieser Wartezeit vom fünften Netzknoten M5 empfangenen Routing-Anfrage-Nachrichten RAN (mit gleicher Sequenznummer bzw. ID) werden hinsichtlich der Pfadmetrik analysiert, wobei der fünfte Netzknoten M5 eine Routing-Antwort-Nachricht RWN für die RAN mit der günstigsten Pfadmetrik an den Root-Netzknoten R sendet. Hierdurch wird die Wahrscheinlichkeit, dass noch weitere RANs (gleicher Sequenznummer bzw. ID) mit besserer Pfadmetrik vom fünften Netzknoten M5 nach dem Senden der Routing-Antwort-Nachricht RWN empfangen werden, verringert, wodurch in vorteilhafter Weise die Anzahl der übermittelten Routing-Antwort-Nachrichten RWN vermindert und das Datenaufkommen verringert werden kann.

Gleichermaßen ist es möglich, dass dann, wenn sich der Datenübertragungspfad vom fünften Netzknoten M5 zum Root-Netzknoten R aus einem anderen Grund als durch Empfang einer RAN ändert und wenn das RWN-Antwort-Flag gesetzt ist, ebenfalls eine Routing-Antwort-Nachricht RWN vom fünften Netzknoten M5 generiert und zum Root-Netzknoten R gesendet wird. Dies kann beispielsweise dann der Fall sein, wenn der fünfte Netzknoten M5 eine den Ausfall eines Datenlinks im Datenübertragungspfad kodierende Fehlernachricht erhält oder über einen Hardware-Detektor den Ausfall eines angrenzenden Datenlinks erfasst.

Für das Löschen des RWN-Antwort-Flags gibt es verschiedene Rücksetz-Varianten.

Gemäß einer ersten Flag-Rücksetz-Variante wird das RWN-Antwort-Flag unmittelbar nach dem Senden einer RWN als Reaktion auf den Empfang einer RAN von dem fünften Netzknoten M5 auf 0 rückgesetzt. Sendet der fünfte Netzknoten M5 innerhalb des Zeitintervalls für das periodische Aussenden von RANs durch den Root-Netzknoten R keine Datenpakete D1, werden empfangene RANs nicht mehr mit einer RWN beantwortet. Für jedes während dieses Zeitintervalls gesendete Datenpaket D1 wird das RWN-Antwort-Flag wieder gesetzt.

Gemäß einer zweiten Flag-Rücksetz-Variante wird das RWN-Antwort-Flag nach Ablauf einer wählbaren Zeitspanne nach dem Senden einer RWN als Reaktion auf den Empfang einer RAN, vor einem ersten Datenpaket D1 bzw. einer Änderung des Datenübertragungspfads, von dem fünften Netzknoten M5 auf 0 rückgesetzt. Hierbei wird ein Timer zur Messung des Zeitablaufs der wählbaren Zeitspanne mit jedem vom fünften Netzknoten M5 zum Root-Netzknoten R gesendeten Datenpaket D1 wieder auf den Startwert zurückgesetzt. Hierbei sollte der Startwert des Timeouts größer sein als das Zeitintervall für das periodische Aussenden von RANs durch den Root-Netzknoten R, damit überhaupt RANs bei einem gesetzten RWN-Antwort-Flag beim fünften Netzknoten M5 ankommen.

Während sich die erste Flag-Rücksetz-Variante an den Abläufen des Routingprotokolls orientiert, richtet sich die zweite Flag-Rücksetz-Variante nach dem Datenverkehr. Ein Vorteil der ersten Flag-Rücksetz-Variante liegt darin, dass kein zusätzlicher Timer benötigt wird. Ein Vorteil der zweiten Flag-Rücksetz-Variante liegt darin, dass sie sehr einfach zu implementieren ist.

Sendet der fünfte Netzknoten M5 innerhalb des Zeitintervalls für das periodische Aussenden von RANs durch den Root-Netzknoten R keine Datenpakete D1, werden empfangene RANs nicht mehr mit einer RWN beantwortet. Für jedes während dieses Zeitintervalls gesendete Datenpaket D1 wird das RWN-Antwort-Flag wieder gesetzt.

Die Parameter des RWN, welche der fünfte Netzknoten M5 an den Root-Netzknoten R schickt, werden entsprechend den Regeln von HWMP bzw. dem HWMP zugrunde liegenden RM-AODV/AODV gesetzt. Die Lebenszeit (Lifetime) im RWN wird auf die im RAN oder proaktivem RREQ enthaltene Lifetime gesetzt.

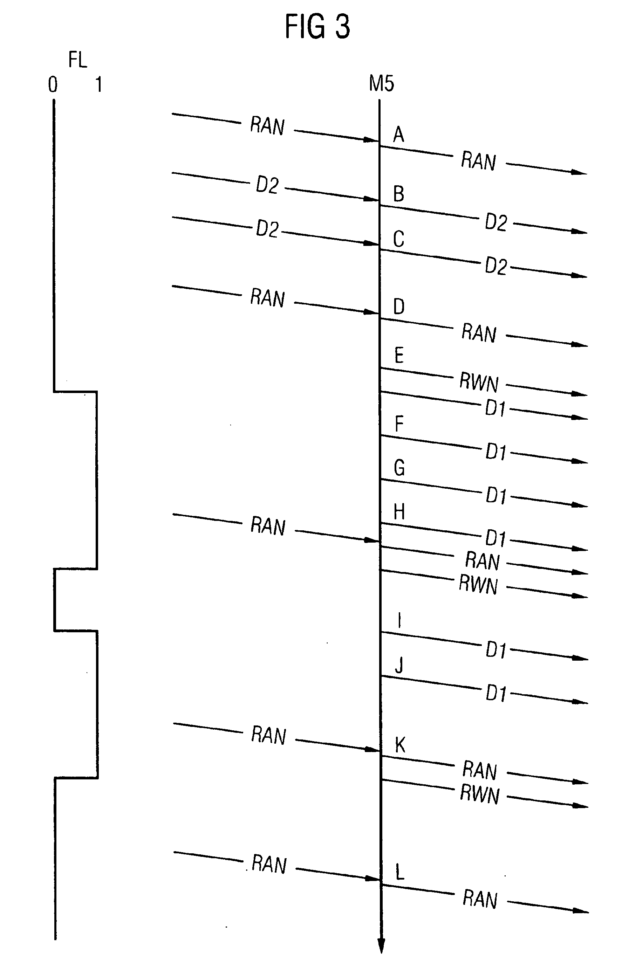

Es wird nun Bezug auf Fig. 3 genommen, worin in einem schematischen Diagramm ein Ausführungsbeispiel des erfindungsgemäßen Verfahrens in dem Kommunikationsnetzwerk von Fig. 1 erläutert ist, wobei die erste Flag-Rücksetz-Variante zum Rücksetzen (Löschen) des RWN-Antwort-Flags realisiert ist.

Im Diagramm von Fig. 3 stellt die Linie "FL" den Zustand des RWN-Antwort-Flags dar, welches gelöscht (0) oder gesetzt (1) sein kann. Die Linie M5 stellt den fünften Netzknoten M5 dar, welcher als Quell-Netzknoten dient. Pfeile welche auf die Linie M5 treffen, symbolisieren vom fünften Netzknoten M5 empfangene Datenpakete. Pfeile welche von der Linie M5 abgehen, symbolisieren vom fünften Netzknoten M5 gesendete Datenpakete. In Fig. 3 verlaufen die Linien FL beziehungsweise M5 jeweils von oben nach unten, wodurch ein zeitlicher Verlauf dargestellt ist. Verschiedene Situationen während des Verfahrens zum Einrichten bidirektionaler Datenübertragungspfade zwischen dem fünften Netzknoten M5 und dem Root-Netzknoten R sind durch die Buchstaben A-L dargestellt.

In Fig. 3 ist das RWN-Gesendet-Flag des fünften Netzknotens M5 nicht dargestellt. Voreingestellt sind das RWN-Antwort-Flag und das RWN-Gesendet-Flag des fünften Netzknotens M5 gelöscht.

In Situation "A" empfängt der fünfte Netzknoten M5 eine Routing-Anfrage-Nachricht RAN vom Root-Netzknoten R, überträgt den darin spezifizierten Datenübertragungspfad in seine Routing-Tabelle bzw. aktualisiert den entsprechenden Eintrag in seiner Routing-Tabelle, um so einen unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "B" empfängt der fünfte Netzknoten M5 ein Datenpaket D2 von einem anderen Netzknoten, beispielsweise dem zweiten Netzknoten M2, und leitet dieses Datenpaket D2 an einen anderen Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "C" empfängt der fünfte Netzknoten M5 wieder ein Datenpaket D2 von einem anderen Netzknoten, beispielsweise dem zweiten Netzknoten M2, und leitet dieses Datenpaket D2 an einen anderen Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "D" empfängt der fünfte Netzknoten M5 eine weitere (neuerlich generierte) Anfrage-Nachricht RAN mit einer von der vorigen RAN verschiedenen Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "E" empfängt der fünfte Netzknoten M5 ein Datenpaket D1 aus einer höheren Schicht (S2), das heißt einer Schicht oberhalb der drahtlosen Mesh-Schicht des Mesh-Netzwerks, innerhalb welcher die Netzknoten Datenpakete austauschen, welches der fünfte Netzknoten M5 an den Root-Netzknoten R übertragen soll. Dies ist in Fig. 3 nicht näher dargestellt.

Noch vor Aussenden des Datenpakets D1 an den Root-Netzknoten R, also noch vor dem Aussenden des ersten Datenpakets D1, generiert und sendet der fünfte Netzknoten M5 eine Antwort-Nachricht RWN an den Root-Netzknoten R. Der Root-Netzknoten R empfängt die RWN und trägt den entsprechenden Datenübertragungspfad zum fünften Netzknoten M5 in seine Routing-Tabelle ein, um so einen unidirektionalen Datenübertragungspfad (Rückpfad) vom Root-Netzknoten zum fünften Netzknoten M5 und auf diese Weise einen bidirektionalen Datenübertragungspfad zwischen dem fünften Netznoten M5 und dem Root-Netzknoten R einzurichten. Gleichzeitig setzt der fünfte Netzknoten M5 sein RWN-Gesendet-Flag. Anschließend sendet der fünfte Netzknoten M5 das Datenpaket D1 an den Root-Netzknoten R. Gleichzeitig setzt der fünfte Netzknoten M5 sein RWN-Antwort-Flag.

In Situation "F" empfängt der fünfte Netzknoten M5 ein weiteres Datenpaket D1, was in Fig. 3 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt.

In Situation "G" empfängt der fünfte Netzknoten M5 ein weiteres Datenpaket D1, was in Fig. 3 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt.

In Situation "H" empfängt der fünfte Netzknoten M5 ein weiteres Datenpaket D1, was in Fig. 3 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt.

Anschließend empfängt der fünfte Netzknoten M5 in Situation "H" eine weitere (neuerlich generierte) Routing-Anfrage-Nachricht RAN mit von der vorigen RAN verschiedener Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Zudem löscht der fünfte Netzknoten M5 sein RWN-Gesendet-Flag bzw. lässt es gesetzt, da sein RWN-Antwort-Flag gesetzt ist.

Da der fünfte Netzknoten M5 eine periodisch ausgesandte Anfrage-Nachricht RAN vom Root-Netzknoten R empfangen hat und da das RWN-Antwort-Flag gesetzt ist, generiert der fünfte Netzknoten M5 eine Antwort-Nachricht RWN und sendet diese, beispielsweise mit einer geringen zeitlichen Verzögerung, an den Root-Netzknoten R. Der fünfte Netzknoten M5 setzt sein RWN-Gesendet-Flag. Der Root-Netzknoten R empfängt die RWN und überschreibt den entsprechenden Datenübertragungspfad zum fünften Netzknoten M5 in seiner Routing-Tabelle, um so seinen unidirektionalen Datenübertragungspfad (Rückpfad) vom Root-Netzknoten R zum fünften Netzknoten M5 zu aktualisieren.

Durch die zeitliche Verzögerung bis zum Aussenden der RWN an den Root-Netzknoten R nach Empfang der RAN wird die Wahrscheinlichkeit, dass noch weitere RANs mit besserer Pfadmetrik (und gleicher Sequenznummer) vom fünften Netzknoten M5 nach dem Senden der Routing-Antwort-Nachricht RWN empfangen werden, verringert, um auf diese Weise die Anzahl der an den Root-Netzknoten R gesendeten RWNs zu verringern.

Gemäß der ersten Flag-Rücksetz-Variante für das RWN-Antwort-Flag, wird das RWN-Antwort-Flag mit dem Aussenden der Antwort-Nachricht RWN gelöscht.

In Situation "I" empfängt der fünfte Netzknoten M5 ein weiteres, für den Root-Netzknoten R bestimmtes Datenpaket D1, was in Fig. 3 nicht näher dargestellt ist, und sendet das Datenpaket D1 an den Root-Netzknoten R. Das RWN-Antwort-Flag des fünften Netzknotens M5 wird gesetzt. Das RWN-Gesendet-Flag des fünften Netzknotens M5 bleibt weiterhin gesetzt.

In Situation "J" empfängt der fünfte Netzknoten M5 ein weiteres Datenpaket D1, was in Fig. 3 nicht näher dargestellt ist, und sendet das Datenpaket D1 an den Root-Netzknoten R. Das RWN-Antwort-Flag des fünften Netzknotens M5 bleibt gesetzt. Das RWN-Gesendet-Flag des fünften Netzknotens M5 bleibt weiterhin gesetzt.

In Situation "K" empfängt der fünfte Netzknoten M5 eine weitere (neuerlich generierte) Anfrage-Nachricht RAN mit gegenüber der vorigen RAN veränderter Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN beispielsweise mit einer geringen zeitlichen Verzögerung an die nächsten Netzknoten weiter. Zudem löscht der fünfte Netzknoten M5 sein RWN-Gesendet-Flag bzw. lässt es gesetzt, da sein RWN-Antwort-Flag gesetzt ist. Da der fünfte Netzknoten M5 eine periodisch ausgesandte Routing-Anfrage-Nachricht RAN vom Root-Netzknoten R empfängt und da das RWN-Antwort-Flag gesetzt ist, generiert der fünfte Netzknoten M5 eine Routing-Antwort-Nachricht RWN und sendet die RWN, beispielsweise mit einer geringen zeitlichen Verzögerung, an den Root-Netzknoten R. Der Root-Netzknoten R empfängt die RWN und überschreibt den entsprechenden Datenübertragungspfad zum fünften Netzknoten M5 in seiner Routing-Tabelle, um so seinen unidirektionalen Datenübertragungspfad (Rückpfad) vom Root-Netzknoten R zum fünften Netzknoten M5 zu aktualisieren. Zudem wird gemäß der ersten Flag-Rücksetz-Variante für das RWN-Antwort-Flag das RWN-Antwort-Flag mit dem Aussenden der Antwort-Nachricht RWN gelöscht. Das RWN-Gesendet-Flag wird mit Aussenden der RWN gesetzt.

In Situation "L" empfängt der fünfte Netzknoten M5 eine weitere (neuerlich generierte) Routing-Anfrage-Nachricht RAN mit von der vorigen RAN verschiedener Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Zwar empfängt der fünfte Netzknoten M5 eine periodisch ausgesandte Anfrage-Nachricht RAN vom Root-Netzknoten R, da jedoch das RWN-Antwort-Flag gelöscht ist, generiert der fünfte Netzknoten M5 keine Antwort-Nachricht RWN und sendet keine entsprechende RWN an den Root-Netzknoten R. Das RWN-Gesendet-Flag wird mit Empfang der RAN gelöscht.

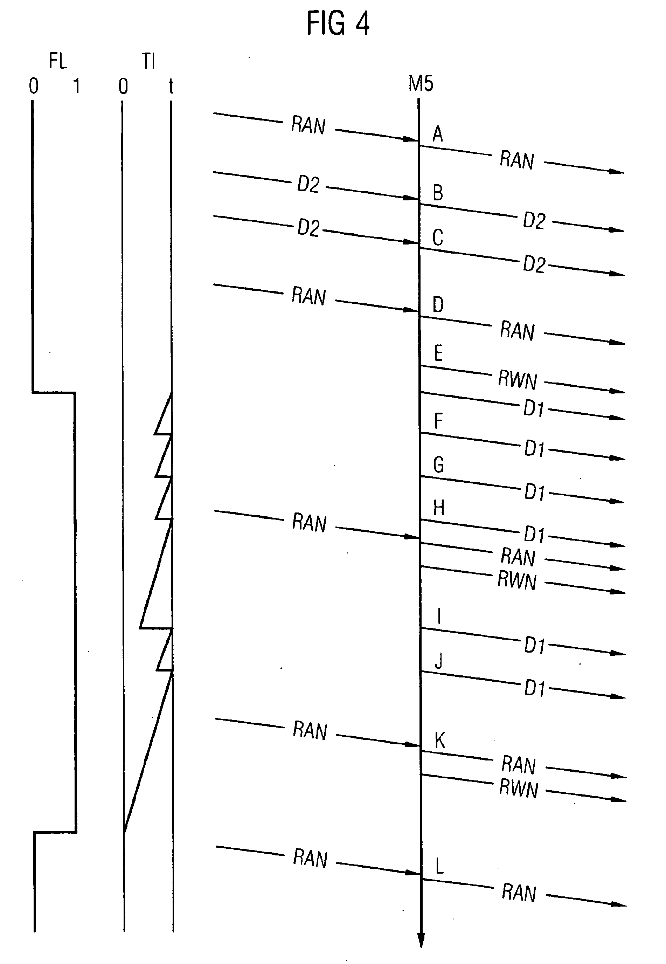

Es wird nun Bezug auf Fig. 4 genommen, worin in einem schematischen Diagramm ein weiteres Ausführungsbeispiel des erfindungsgemäßen Verfahrens in dem Kommunikationsnetzwerk von Fig. 1 erläutert ist, wobei die zweite Flag-Rücksetz-Variante zum Rücksetzen des RWN-Antwort-Flags realisiert ist.

Im Diagramm von Fig. 4 stellen, in analoger Weise zu Fig. 3, die Linie "FL" den Zustand des RWN-Antwort-Flags und die Linie M5 den fünften Netzknoten M5 dar. Zudem ist der zeitliche Verlauf eines abzählenden Timers TI zum Rücksetzen des RWN-Antwort-Flags des fünften Netzknotens M5 dargestellt, welcher von einer Startzeit t bis zur Ablaufzeit Null einer voreinstellbaren Zeitspanne t zählt. Der Startwert des Timeouts ist größer als das Zeitintervall für das periodische Aussenden von RANs durch den Root-Netzknoten R, damit überhaupt RANs bei einem gesetzten RWN-Antwort-Flag beim fünften Netzknoten M5 ankommen. Verschiedene Situationen während des Verfahrens zum Einrichten bidirektionaler Datenübertragungspfade zwischen dem fünften Netzknoten M5 und dem Root-Netzknoten R sind durch die Buchstaben A-L dargestellt.

In Fig. 4 ist das RWN-Gesendet-Flag des fünften Netzknotens M5 nicht dargestellt. In der zweiten Flag-Rücksetz-Variante zum Rücksetzen des RWN-Antwort-Flags kann auch das RWN-Antwort-Flag anstelle des RWN-Gesendet-Flags verwendet werden, um festzustellen, ob ein Datenpaket D1 ein erstes Datenpaket (RWN-Antwort-Flag ist gelöscht) oder ein weiteres Datenpaket (RWN-Antwort-Flag ist gesetzt) ist. Voreingestellt ist das RWN-Antwort-Flag des fünften Netzknotens M5 gelöscht. Voreingestellt ist das RWN-Gesendet-Flag des fünften Netzknotens M5 gelöscht.

In Situation "A" empfängt der fünfte Netzknoten M5 eine Anfrage-Nachricht RAN vom Root-Netzknoten R, überträgt den darin spezifizierten Datenübertragungspfad in seine Routing-Tabelle bzw. aktualisiert den entsprechenden Eintrag in seiner Routing-Tabelle, um so einen unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "B" empfängt der fünfte Netzknoten M5 ein Datenpaket D2 von einem anderen Netzknoten, beispielsweise dem zweiten Netzknoten M2, und leitet dieses Datenpaket D2 an einen anderen Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "C" empfängt der fünfte Netzknoten M5 wieder ein Datenpaket D2 von einem anderen Netzknoten, beispielsweise dem zweiten Netzknoten M2, und leitet dieses Datenpaket D2 an einen anderen Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "D" empfängt der fünfte Netzknoten M5 eine weitere (neuerlich generierte) Anfrage-Nachricht RAN mit einer von der vorigen RAN verschiedenen Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN beispielsweise mit einer geringen zeitlichen Verzögerung an die nächsten Netzknoten weiter. Das RWN-Antwort-Flag des fünften Netzknotens M5 bleibt weiterhin gelöscht. Das RWN-Gesendet-Flag des fünften Netzknotens M5 bleibt weiterhin gelöscht.

In Situation "E" empfängt der fünfte Netzknoten M5 ein Datenpaket D1 aus einer höheren Schicht (S2), das heißt einer Schicht oberhalb der drahtlosen Mesh-Schicht des Mesh-Netzwerks, innerhalb welcher die Netzknoten Datenpakete austauschen, welches der fünfte Netzknoten M5 an den Root-Netzknoten R übertragen soll. Dies ist in Fig. 4 nicht näher dargestellt.

Noch vor Aussenden des Datenpakets D1 an den Root-Netzknoten R, also noch vor dem Aussenden des ersten Datenpakets D1, generiert und sendet der fünfte Netzknoten M5 eine Antwort-Nachricht RWN an den Root-Netzknoten R. Der Root-Netzknoten R empfängt die RWN und trägt den entsprechenden Datenübertragungspfad zum fünften Netzknoten M5 in seine Routing-Tabelle ein, um so einen unidirektionalen Datenübertragungspfad (Rückpfad) vom Root-Netzknoten zum fünften Netzknoten M5 und auf diese Weise einen bidirektionalen Datenübertragungspfad zwischen dem fünften Netznoten M5 und dem Root-Netzknoten R einzurichten. Gleichzeitig setzt der fünfte Netzknoten M5 sein RWN-Gesendet-Flag. Anschließend sendet der fünfte Netzknoten M5 das Datenpaket D1 an den Root-Netzknoten R, setzt sein RWN-Antwort-Flag und setzt den Timer TI mit der Startzeit t in Gang.

In Situation "F" empfängt der fünfte Netzknoten M5 ein weiteres Datenpaket D1, was in Fig. 4 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt. Der Timer TI wird auf die Startzeit t zurückgestellt und wieder in Gang gesetzt.

In Situation "G" empfängt der fünfte Netzknoten M5 ein weiteres Datenpaket D1, was in Fig. 4 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt. Der Timer TI wird auf die Startzeit t zurückgestellt und wieder in Gang gesetzt.

In Situation "H" empfängt der fünfte Netzknoten M5 ein weiteres Datenpaket D1, was in Fig. 4 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt. Der Timer TI wird auf die Startzeit t zurückgestellt und wieder in Gang gesetzt.

Anschließend empfängt der fünfte Netzknoten M5 eine weitere (neuerlich generierte) Routing-Anfrage-Nachricht RAN mit einer von der vorigen RAN verschiedenen Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN mit einer geringen zeitlichen Verzögerung an die nächsten Netzknoten weiter. Der fünfte Netzknoten M5 löscht sein RWN-Gesendet-Flag bzw. lässt es gesetzt, da sein RWN-Antwort-Flag gesetzt ist.

Da der fünfte Netzknoten M5 eine periodisch ausgesandte Routing-Anfrage-Nachricht RAN vom Root-Netzknoten R empfangen hat und da das RWN-Antwort-Flag gesetzt ist, generiert der fünfte Netzknoten M5 eine Routing-Antwort-Nachricht RWN und sendet die RWN, beispielsweise mit einer geringen zeitlichen Verzögerung, an den Root-Netzknoten R. Der fünfte Netzknoten M5 setzt sein RWN-Gesendet-Flag. Der Root-Netzknoten R empfängt die RWN und überschreibt den entsprechenden Datenübertragungspfad zum fünften Netzknoten M5 in seiner Routingtabelle, um so seinen Datenübertragungspfad (Rückpfad) vom Root-Netzknoten R zum fünften Netzknoten M5 zu aktualisieren. Gemäß der zweiten Flag-Rücksetz-Variante für das RWN-Antwort-Flag, bleibt das RWN-Antwort-Flag weiterhin gesetzt.

In Situation "I" empfängt der fünfte Netzknoten M5 ein weiteres Datenpaket D1, was in Fig. 4 nicht näher dargestellt ist, und sendet das Datenpaket D1 an den Root-Netzknoten R. Das RWN-Antwort-Flag des fünften Netzknotens M5 bleibt weiterhin gesetzt. Das RWN-Gesendet-Flag des fünften Netzknotens M5 bleibt weiterhin gesetzt. Der Timer TI wird auf die Startzeit t zurückgestellt und wieder in Gang gesetzt.

In Situation "J" empfängt der fünfte Netzknoten M5 ein weiteres Datenpaket D1, was in Fig. 4 nicht näher dargestellt ist, und sendet das Datenpaket D1 an den Root-Netzknoten R. Das RWN-Antwort-Flag des fünften Netzknotens M5 bleibt gesetzt. Das RWN-Gesendet-Flag des fünften Netzknotens M5 bleibt weiterhin gesetzt. Der Timer TI wird auf die Startzeit t zurückgestellt und wieder in Gang gesetzt.

In Situation "K" empfängt der fünfte Netzknoten M5 eine weitere (neuerlich generierte) Routing-Anfrage-Nachricht RAN mit einer von der vorigen RAN verschiedenen Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN beispielsweise mit einer geringen zeitlichen Verzögerung an die nächsten Netzknoten weiter. Zudem löscht der fünfte Netzknoten M5 sein RWN-Gesendet-Flag oder lässt es gesetzt, da sein RWN-Antwort-Flag gesetzt ist. Da der fünfte Netzknoten M5 eine periodisch ausgesandte Anfrage-Nachricht RAN vom Root-Netzknoten R empfängt und da das RWN-Antwort-Flag auf "1" gesetzt ist, generiert der fünfte Netzknoten M5 eine Routing-Antwort-Nachricht RWN und sendet diese RWN, beispielsweise mit einer geringen zeitlichen Verzögerung, an den Root-Netzknoten R. Der Root-Netzknoten R empfängt die RWN und überschreibt den entsprechenden Datenüberträgungspfad zum fünften Netzknoten M5 in seiner Routing-Tabelle, um so seinen Datenübertragungspfad (Rückpfad) vom Root-Netzknoten R zum fünften Netzknoten M5 zu aktualisieren. Gemäß der zweiten Flag-Rücksetz-Variante für das RWN-Antwort-Flag bleibt das RWN-Antwort-Flag weiterhin gesetzt. Das RWN-Gesendet-Flag wird gesetzt.

In Situation "L" ist die Zeitspanne des Timers TI abgelaufen und das RWN-Antwort-Flag des fünften Netzknotens M5 wird gelöscht. Anschließend empfängt der fünfte Netzknoten M5 eine weitere (neuerlich generierte) Routing-Anfrage-Nachricht RAN mit von der vorigen RAN verschiedener Sequenznummer vom Root-Netzknoten R, aktualisiert den entsprechenden Eintrag in seiner Routing-Tabelle, um so einen aktualisierten unidirektionalen Datenübertragungspfad vom fünften Netzknoten M5 zum Root-Netzknoten R einzurichten, aktualisiert die RAN und sendet diese modifizierte RAN beispielsweise mit einer geringen zeitlichen Verzögerung an die nächsten Netzknoten weiter. Zwar empfängt der fünfte Netzknoten M5 eine periodisch ausgesandte Routing-Anfrage-Nachricht RAN vom Root-Netzknoten R, da jedoch das RWN-Antwort-Flag gelöscht ist, generiert der fünfte Netzknoten M5 keine Antwort-Nachricht RWN und sendet keine entsprechende RWN an den Root-Netzknoten R. Das RWN-Gesendet-Flag wird gelöscht.

Im Weiteren werden anhand eines Rechenbeispiels die Vorteile des erfindungsgemäßen Verfahrens (Beispiel 1), gegenüber einem herkömmlichen Verfahren, bei dem nur einmalig vor dem ersten Datenpaket D1 eine Routing-Antwort-Nachricht an den Root-Netzknoten gesendet wird (Vergleichsbeispiel 1), und gegenüber einem weiteren möglichen Verfahren, bei dem immer nach Erhalt einer Routing-Anfrage-Nachricht (RAN) eine Routing-Antwort-Nachricht an den Root-Netzknoten gesendet wird (Vergleichsbeispiel 2), dargestellt.

Es werden die folgenden Abkürzungen verwendet:
N = Anzahl der Netzknoten
H = Pfadlänge zwischen einem Netzknoten und dem Root-Netzknoten
dH = durchschnittliche Pfadlänge von allen Netzknoten zum Root-Netzknoten; dH ≥ 1
t_g = t_gesamt: betrachteter Zeitraum
t_d = t_daten: Zeit, in der der Netzknoten als Quell-Netzknoten Daten zum Root-Netzknoten sendet
RAI = Zeitdauer des Routing-Anfrage-Nachrichten (RAN)-Intervalls
ara = Anzahl der durch den Root-Netzknoten initiierten Routing-Anfrage-Nachrichten (RANs)während des betrachteten Zeitraums ara = ((t_g/RAI)+1)

### Beispiel 1

Für Beispiel 1, also proaktive RANs mit reaktivem (on-demand) RWN, ergibt sich die Anzahl der RAN zu: ara * N.
Anzahl der RWN: ((t_d/RAI)+1) * H.
Summarische Anzahl der Routing-Nachrichten:
ara * N + ((t_d/RAI)+1) * H.

### Vergleichsbeispiel 1

Anzahl der RAN: ara * N.
Anzahl der RWN: H (vor dem ersten Datenpaket D1).
Summarische Anzahl der Routing-Nachrichten: ara * N + H.

### Vergleichsbeispiel 2

Anzahl der RAN: ara * N.
Anzahl der RWN: ara * N * dH.
Summarische Anzahl der Routing-Nachrichten:
ara * N * (1+ dH).

Typische Werte sind beispielsweise:
N = 30
H = 4
dH = 3
t_g = 900 s
t_d = 300 s
RAI = 5 s

Hierbei ergeben sich die folgenden Kosten (summarische Anzahl der gesendeten Routing-Nachrichten):
(ara = 181)

### Beispiel 1: 5674 Routing-Nachrichten

Vergleichsbeispiel 1: 5431 Routing-Nachrichten
Vergleichsbeispiel 2: 21720 Routing-Nachrichten

Wie das Rechenbeispiel zeigt, kann durch Beispiel 1 (erfindungsgemäßes Verfahren) eine beträchtliche Verminderung der Anzahl von Routing-Nachrichten erzielt werden, hier 73,9%.

Weitere Merkmale der Erfindung ergeben sich aus der folgenden Beschreibung:

Die allgemeine Idee dieser Erfindung, die den Non-Registration Modus verbessert, umfasst:
- dass RANs immer nur dann mit einer RWN von einem Netzknoten beantwortet werden, wenn dieser Netzknoten Datenpakete D1 an den Root-Netzknoten sendet und dieser Netzknoten der Quell-Netzknoten dieser Datenpakete D1 ist;
- ein RWN-Antwort-Flag, welches bestimmt, ob eine RWN als Antwort auf eine RAN gesendet werden soll. OFF/0 bedeutet, dass keine RWN geschickt wird, ON/1 bedeutet, dass eine RWN als Antwort bei Erhalt einer RAN an den Root-Netzknoten gesendet wird;
- verschiedene Mechanismen zum Setzen und Löschen des oben genannten Flags.

Die prinzipielle Regel lautet, dass eine RWN von einem Netzknoten an den Root-Netzknoten geschickt wird, wenn die folgende Bedingung gilt:
[RWN-Antwort-Flag = ON/1] UND [[Netzknoten hat RAN erhalten] ODER [Pfad zum Root-Netzknoten hat sich verändert]].

Die Mechanismen des erfindungsgemäßen Verfahrens werden nur von Netzknoten ausgeführt, die Quell-Netzknoten von Datenpaketen D1 sind und die an den Root-Netzknoten R gesendet werden. Das heißt, die Datenpakete kommen in diesen Netzknoten von einer höheren Schicht und dieser Netzknoten ist der erste Knoten dieser Mesh-Verbindung. Zwischenknoten, die Datenpakete D2 erhalten und diese entsprechend ihrer Routing-Tabelle an andere Netzknoten weiterleiten, brauchen für diese Datenpakete D2 die in dem erfindungsgemäßen Verfahren beschriebenen Mechanismen nicht zu beachten. Insbesondere wird aufgrund solcher Datenpakete D2 keine RWN zum Root-Netzknoten geschickt und auch nicht das RWN-Antwort-Flag gesetzt. Durch das erfindungsgemäße Verfahren ist es ermöglicht, dass Hin- und Rückpfade zur Übertragung von Datenpaketen zwischen Netzknoten und Root-Netzknoten über dieselben Netzknoten verlaufen, wenn Daten zwischen diesen beiden Netzknoten ausgetauscht werden. Hin- und Rückpfade verlaufen über den besten Pfad. Ausfälle von Datenlinks (Link-Brüche) können durch das erfindungsgemäße Verfahren sowohl für den Hinpfad als auch für den Rückpfad behoben werden. Ausfälle von Datenlinks auf dem Rückpfad vom Root-Netzknoten zum Netzknoten brauchen nicht mehr mit den aufwändigeren AODV-Route-Recovery-Mechanismen behoben werden.

Das RWN-Antwort-Flag bietet eine einfache Entscheidungsmethode, ob eine RWN als Antwort auf eine RAN gesendet werden soll. Die verschiedenen Verfahren zum Zurücksetzen des RWN-Antwort-Flags bieten eine flexible Gestaltung, beispielsweise die Verwendung einer Sicherheitszeit nach dem letzten Datenpaket, in der immer noch eine RWN gesendet und damit der Rückpfad vom Root-Netzknoten zum Netzknoten noch aufrecht erhalten bleibt. Durch die Antwort auf RANs mit einer RWN können auch Veränderungen des Datenübertragungspfads in den Zwischenknoten für die Rückrichtung aktualisiert werden. Durch die zusätzliche Verbesserung, dass eine RWN an den Root-Netzknoten bei gesetztem RWN-Antwort-Flag auch dann geschickt wird, wenn sich der Datenübertragungspfad vom Netzknoten zum Root-Netzknoten aus einem anderen Grund als durch Erhalt einer RAN ändert, können Veränderungen des Hinpfads an den Rückpfad weitergegeben werden, so dass er entsprechend aktualisiert wird. Die Verwendung der Lifetime aus der RAN bzw. aus der proaktiven RREQ für die Lifetime im gesendeten RWN bewirkt eine gleich lange Verfügbarkeit des Hin- und Rückpfads.

## Patentansprüche

1. Verfahren zum Einrichten eines bidirektionalen Datenübertragungspfads in einem drahtlosen vermaschten paketvermittelten Kommunikationsnetzwerk mit einer Mehrzahl Netzknoten, von denen einer als Root-Netzknoten dient, wobei in dem Kommunikationsnetzwerk:
- eine logische Topologie in Form wenigstens eines Routingbaums proaktiv eingerichtet wird, indem der Root-Netzknoten (R) des Routingbaums in periodischen Zeitabständen Routing-Anfrage-Nachrichten (RANs) an die Netzknoten (M1-M7) des Kommunikationsnetzwerks sendet, wobei die Routing-Anfrage-Nachrichten erste unidirektionale Datenübertragungspfade zum Root-Netzknoten (R) spezifizieren,
- in den Netzknoten (M1-M7) des Routingbaums jeweils ein in zwei verschiedene Zustände versetzbares erstes Flag zum Steuern des Sendens einer Routing-Antwort-Nachricht (RWN) eingerichtet ist, wobei das erste Flag eines Netzknotens (M5) nur dann in einen wählbaren ersten Zustand (ON) versetzt wird, wenn der Netzknoten (M5) als erster Netzknoten des Kommunikationsnetzwerks auf dem Datenübertragungspfad zum Root-Netzknoten (R) ein Datenpaket (D1) zur Übertragung an den Root-Netzknoten (R) erhält,
- ein Netzknoten (M5) dann, wenn das erste Flag in den ersten Zustand (ON) versetzt ist, bei Empfang einer der Routing-Anfrage-Nachrichten (RAN) eine Routing-Antwort-Nachricht (RWN) an den Root-Netzknoten (R) sendet, wobei die Routing-Antwort-Nachricht einen zweiten unidirektionalen Datenübertragungspfad zum Netzknoten spezifiziert, wodurch ein bidirektionaler Datenübertragungspfad zwischen dem Root-Netzknoten (R) und dem Netzknoten (M5) eingerichtet wird, und
- ein Netzknoten dann, wenn das erste Flag in einen zweiten Zustand versetzt ist, keine Routing-Anwort-Nachricht sendet.

2. Verfahren nach Anspruch 1, bei welchem das erste Flag eines Netzknotens (M5) unmittelbar nach dem Senden einer Routing-Antwort-Nachricht (RWN) an den Root-Netzknoten (R) in den zweiten Zustand (OFF) versetzt wird.

3. Verfahren nach Anspruch 1 oder 2, bei welchem das erste Flag eines Netzknotens (M5) nach Ablauf einer wählbaren ersten Zeitspanne in den zweiten Zustand (OFF) versetzt wird, die mit dem Aussenden eines Datenpakets (D1) an den Root-Netzknoten (R), das der Netzknoten (M5) als erster Netzknoten des Kommunikationsnetzwerks auf dem Datenübertragungspfad zum Root-Netzknoten (R) erhalten hat, gestartet wird, wobei die erste Zeitspanne bei jedem Aussenden eines solchen Datenpakets (D1) auf einen Startwert der wählbaren ersten Zeitspanne rückgestellt wird.

4. Verfahren nach einem der Ansprüche 1 bis 3, bei welchem ein Netzknoten (M5) eine Routing-Antwort-Nachricht (RWN) an den Root-Netzknoten (R) sendet, wenn der Netzknoten als erster Netzknoten des Kommunikationsnetzwerks auf dem Datenübertragungspfad zum Root-Netzknoten ein Datenpaket (D1) zum Senden an den Root-Netzknoten erhalten hat und für eine dem Empfang des Datenpakets unmittelbar vorausgehende zweite Zeitspanne kein Datenpaket (D1) zum Senden an den Root-Netzknoten als erster Netzknoten des Kommunikationsnetzwerks auf dem Datenübertragungspfad zum Root-Netzknoten (R) erhalten hat.

5. Verfahren nach Anspruch 4, bei welchem ein Netzknoten (M5) eine Routing-Antwort-Nachricht (RWN) an den Root-Netzknoten (R) sendet, wenn ein im Netzknoten eingerichtetes, in zwei verschiedene Zustände (ON/OFF) versetzbares zweites Flag zum Steuern des Aussendens einer Routing-Antwort-Nachricht in einen wählbaren ersten Zustand (O) versetzt ist.

6. Verfahren nach Anspruch 5, bei welchem die zweiten Flags der Netzknoten (M1-M7) bei einer anfänglichen Initialisierung des Kommunikationsnetzwerks auf den zweiten Zustand (OFF) voreingestellt werden.

7. Verfahren nach einem der Ansprüche 1 bis 6, bei welchem das erste Flag eines Netzknotens (M5) in den ersten Zustand (ON) versetzt wird, wenn der Netzknoten eine Routing-Antwort-Nachricht (RWN) an den Root-Netzknoten (R) vor dem ersten Datenpaket (D1) einer Datenkommunikation an den Root-Netzknoten (R) sendet.

8. Verfahren nach einem der Ansprüche 1 bis 7, bei welchem die Routing-Antwort-Nachricht (RWN) unmittelbar nach Empfang der Routing-Anfrage-Nachricht (RAN) an den Root-Netzknoten (R) gesendet wird.

9. Verfahren nach einem der Ansprüche 1 bis 7, bei welchem die Routing-Antwort-Nachricht (RWN) mit einer zeitlichen Verzögerung nach Empfang der Routing-Anfrage-Nachricht (RAN) an den Root-Netzknoten (R) gesendet wird.

10. Verfahren nach einem der Ansprüche 1 bis 9, bei welchem die ersten Flags der Netzknoten (M1-M7) bei einer anfänglichen Initialisierung des Kommunikationsnetzwerks auf den zweiten Zustand (OFF) voreingestellt werden.

11. Verfahren nach einem der Ansprüche 1 bis 10, bei welchem ein die Lebenszeit eines zweiten unidirektionalen Datenübertragungspfads zu einem Netzknoten kodierender Lifetime-Parameter einer Routing-Antwort-Nachricht (RWN) auf einen in der empfangenen Routing-Anfrage-Nachricht (RAN) enthaltenen, die Lebenszeit eines ersten unidirektionalen Datenübertragungspfads zum Root-Netzknoten (R) kodierenden Lifetime-Parameter eingestellt wird.

12. Verfahren nach einem der Ansprüche 1 bis 11, welches auf dem hybriden Routingprotokoll HWMP basiert.

13. Verfahren zum Einrichten eines bidirektionalen Datenübertragungspfades in einem drahtlosen vermaschten paketvermittelten Kommunikationsnetzwerk mit einer Mehrzahl Netzknoten, von denen einer als Root-Netzknoten dient, wobei in dem Kommunikationsnetzwerk:
- eine logische Topologie in Form wenigstens eines Routingbaums proaktiv eingerichtet wird, indem der Root-Netzknoten (R) des Routingbaums in periodischen Zeitabständen Routing-Anfrage-Nachrichten (RANs) an die Netzknoten (M1-M7) des Kommunikationsnetzwerks sendet, wobei die Routing-Anfrage-Nachrichten erste unidirektionale Datenübertragungspfade zum Root-Netzknoten (R) spezifizieren,
- in den Netzknoten (M1-M7) des Routingbaums jeweils ein in zwei verschiedene Zustände versetzbares erstes Flag zum Steuern des Sendens einer Routing-Antwort-Nachricht (RWN) eingerichtet ist, wobei das erste Flag eines Netzknotens (M5) nur dann in einen wählbaren ersten Zustand (ON) versetzt wird, wenn der Netzknoten (M5) als erster Netzknoten des Kommunikationsnetzwerks auf dem Datenübertragungspfad zum Root-Netzknoten (R) ein Datenpaket (D1) zur Übertragung an den Root-Netzknoten (R) erhält,
- ein Netzknoten (M5) dann, wenn das erste Flag in den ersten Zustand (ON) versetzt ist, bei Detektieren einer Änderung des ersten unidirektionalen Datenübertragungspfads zum Root-Netzknoten (R) eine Routing-Antwort-Nachricht (RWN) an den Root-Netzknoten (R) sendet, wobei die Routing-Antwort-Nachricht einen zweiten unidirektionalen Datenübertragungspfad zum Netzknoten spezifiziert, wodurch ein bidirektionaler Datenübertragungspfad zwischen dem Root-Netzknoten (R) und dem Netzknoten (M5) eingerichtet wird, und -ein Netzknoten dann, wenn das erste Flag in einen zweiten Zustand versetzt ist, keine Routing-Anwort-Nachricht sendet.

14. Drahtloses vermaschtes paketvermitteltes Kommunikationsnetzwerk, in welchem die Netzknoten (M1-M7) zur Durchführung eines Verfahrens nach einem der Ansprüche 1 bis 13 geeignet eingerichtet sind.

15. Maschinenlesbarer Programmcode für einen Netzknoten (M1-M7) eines Kommunikationsnetzwerks nach Anspruch 14, der Steuerbefehle enthält, die den Netzknoten zur Durchführung eines Verfahrens nach einem der Ansprüche 1 bis 13 veranlassen.

16. Netzknoten (M1-M7) eines Kommunikationsnetzwerks nach Anspruch 14, in dem ein maschinenlesbarer Programmcode gemäß Anspruch 15 ausgeführt wird.

17. Speichermedium mit einem darauf gespeicherten maschinenlesbaren Programmcode gemäß Anspruch 15.

## Claims

1. Method for setting up a bidirectional data transmission path in a wireless meshed packet-switched communication network having a plurality of network nodes, one of which serves as the root network node, wherein in the communication network:
- a logical topology in the form of at least one routing tree is set up proactively in that the root network node (R) of the routing tree sends routing request messages (RANs) to the network nodes (M1-M7) of the communication network at regular time intervals, wherein the routing request messages specify first unidirectional data transmission paths to the root network node (R),
- a first flag which can be placed into two different states for controlling the sending of a routing reply message (RWN) is set up in each of the network nodes (M1-M7) of the routing tree, wherein the first flag of a network node (M5) is placed into a selectable first state (ON) only when the network node (M5), as the first network node of the communication network on the data transmission path to the root network node (R), receives a data packet (D1) for transmission to the root network node (R),
- when the first flag has been placed into the first state (ON), a network node (M5), upon receiving one of the routing request messages (RAN), sends a routing reply message (RWN) to the root network node (R), wherein the routing reply message specifies a second unidirectional data transmission path to the network node, as a result of which a bidirectional data transmission path is set up between the root network node (R) and the network node (M5), and
- a network node sends no routing reply message when the first flag has been placed into a second state.

2. Method according to claim 1, wherein the first flag of a network node (M5) is placed into the second state (OFF) immediately after the sending of a routing reply message (RWN) to the root network node (R).

3. Method according to claim 1 or 2, wherein the first flag of a network node (M5) is placed into the second state (OFF) following expiration of a selectable first time period which is started with the transmitting of a data packet (D1) to the root network node (R), which data packet the network node (M5) received as the first network node of the communication network on the data transmission path to the root network node (R), wherein the first time period is reset to a start value of the selectable first time period each time such a data packet (D1) is transmitted.

4. Method according to one of claims 1 to 3, wherein a network node (M5) sends a routing reply message (RWN) to the root network node (R) when the network node, as the first network node of the communication network on the data transmission path to the root network node, has received a data packet (D1) for sending to the root network node and, for a second time period immediately preceding the reception of the data packet, has received no data packet (D1) for sending to the root network node as the first network node of the communication network on the data transmission path to the root network node (R).

5. Method according to claim 4, wherein a network node (M5) sends a routing reply message (RWN) to the root network node (R) when a second flag which is set up in the network node and can be placed into two different states (ON/OFF) for controlling the transmission of a routing reply message has been placed into a selectable first state (ON).

6. Method according to claim 5, wherein the second flags of the network nodes (M1-M7) are preset by default to the second state (OFF) at the time of a first initialisation of the communication network.

7. Method according to one of claims 1 to 6, wherein the first flag of a network node (M5) is placed into the first state (ON) when the network node sends a routing reply message (RWN) to the root network node (R) before the first data packet (D1) of a data communication to the root network node (R).

8. Method according to one of claims 1 to 7, wherein the routing reply message (RWN) is sent to the root network node (R) immediately following reception of the routing request message (RAN).

9. Method according to one of claims 1 to 7, wherein the routing reply message (RWN) is sent to the root network node (R) with a time delay following reception of the routing request message (RAN).

10. Method according to one of claims 1 to 9, wherein the first flags of the network nodes (M1-M7) are preset by default to the second state (OFF) at the time of a first initialisation of the communication network.

11. Method according to one of claims 1 to 10, wherein a lifetime parameter of a routing reply message (RWN) encoding the lifetime of a second unidirectional data transmission path to a network node is set to a lifetime parameter contained in the received routing request message (RAN) and encoding the lifetime of a first unidirectional data transmission path to the root network node (R).

12. Method according to one of claims 1 to 11 which is based on the HWMP hybrid routing protocol.

13. Method for setting up a bidirectional data transmission path in a wireless meshed packet-switched communication network having a plurality of network nodes, one of which serves as the root network node, wherein in the communication network:
- a logical topology in the form of at least one routing tree is set up proactively in that the root network node (R) of the routing tree sends routing request messages (RANs) to the network nodes (M1-M7) of the communication network at regular time intervals, wherein the routing request messages specify first unidirectional data transmission paths to the root network node (R),
- a first flag which can be placed into two different states for controlling the sending of a routing reply message (RWN) is set up in each of the network nodes (M1-M7) of the routing tree, wherein the first flag of a network node (M5) is placed into a selectable first state (ON) only when the network node (M5), as the first network node of the communication network on the data transmission path to the root network node (R), receives a data packet (D1) for transmission to the root network node (R),
- when the first flag has been placed into the first state (ON), a network node (M5), upon detecting a change in the first unidirectional data transmission path to the root network node (R), sends a routing reply message (RWN) to the root network node (R), wherein the routing reply message specifies a second unidirectional data transmission path to the network node, as a result of which a bidirectional data transmission path is set up between the root network node (R) and the network node (M5), and
- a network node sends no routing reply message when the first flag has been placed into a second state.

14. Wireless meshed packet-switched communication network in which the network nodes (M1-M7) are configured in a suitable manner for performing a method according to one of claims 1 to 13.

15. Machine-readable program code for a network node (M1-M7) of a communication network according to claim 14, which machine-readable program code contains control commands that cause the network node to perform a method according to one of claims 1 to 13.

16. Network node (M1-M7) of a communication network according to claim 14, in which network node a machine-readable program code according to claim 15 is executed.

17. Storage medium on which a machine-readable program code according to claim 15 is stored.

## Revendications

1. Procédé pour établir un chemin bidirectionnel de transmission de données dans un réseau maillé de communication sans fil par commutation de paquets avec une pluralité de noeuds de réseau dont un sert de noeud de réseau racine, le réseau de communication étant tel que :
- une topologie logique en forme d'au moins une arborescence de routage y est aménagée de manière proactive par le fait que le noeud de réseau racine (R) de l'arborescence de routage envoie à intervalles périodiques des messages de requête de routage (RANs) aux noeuds de réseau (M1-M7) du réseau de communication, les messages de requête de routage spécifiant de premiers chemins unidirectionnels de transmission de données vers le noeud de réseau racine (R) ;
- respectivement un premier drapeau pouvant passer à deux états différents et servant à commander l'émission d'un message de réponse de routage (RWN) est implanté dans les noeuds de réseau (M1-M7) de l'arborescence de routage, le premier drapeau d'un noeud de réseau (M5) ne passant à un premier état sélectionnable (ON) que si le noeud de réseau (M5) reçoit, en tant que premier noeud de réseau du réseau de communication sur le chemin de transmission de données vers le noeud de réseau racine (R), un paquet de données (D1) à transmettre au noeud de réseau racine (R) ;
- un noeud de réseau (M5), à la réception de l'un des messages de requête de routage (RAN), envoie un message de réponse de routage (RWN) au noeud de réseau racine (R) lorsque le premier drapeau est passé au premier état (ON), le message de réponse de routage spécifiant un deuxième chemin unidirectionnel de transmission de données vers le noeud de réseau, ce par quoi un chemin bidirectionnel de transmission de données est établi entre le noeud de réseau racine (R) et le noeud de réseau (M5) ; et
- un noeud de réseau n'émet pas de message de réponse de routage lorsque le premier drapeau est passé à un deuxième état.

2. Procédé selon la revendication 1, dans lequel le premier drapeau d'un noeud de réseau (M5) passe au deuxième état (OFF) immédiatement après l'envoi d'un message de réponse de routage (RWN) au noeud de réseau racine (R).

3. Procédé selon la revendication 1 ou 2, dans lequel le premier drapeau d'un noeud de réseau (M5) passe au deuxième état (OFF) à l'expiration d'un premier laps de temps sélectionnable, lequel démarre à l'envoi d'un paquet de données (D1) au noeud de réseau racine (R) que le noeud de réseau (M5) a reçu en tant que premier noeud de réseau du réseau de communication sur le chemin de transmission de données vers le noeud de réseau racine (R), le premier laps de temps étant remis à une valeur de départ du premier laps de temps sélectionnable à chaque émission d'un tel paquet de données (D1).

4. Procédé selon l'une des revendications 1 à 3, dans lequel un noeud de réseau (M5) envoie un message de réponse de routage (RWN) au noeud de réseau racine (R) lorsque le noeud de réseau a reçu, en tant que premier noeud de réseau du réseau de communication sur le chemin de transmission de données vers le noeud de réseau racine, un paquet de données (D1) à envoyer au noeud de réseau racine et, pour un deuxième laps de temps qui précède directement la réception du paquet de données, n'a pas reçu de paquet de données (D1) à envoyer au noeud de réseau racine en tant que premier noeud de réseau du réseau de communication sur le chemin de transmission de données vers le noeud de réseau racine (R).

5. Procédé selon la revendication 4, dans lequel un noeud de réseau (M5) envoie un message de réponse de routage (RWN) au noeud de réseau racine (R) lorsqu'un deuxième drapeau implanté dans le noeud de réseau, pouvant passer à deux états différents (ON/OFF) et servant à la commande de l'émission d'un message de réponse de routage, est passé à un premier état sélectionnable (O) .

6. Procédé selon la revendication 5, dans lequel les deuxièmes drapeaux des noeuds de réseau (M1-M7), lors d'une initialisation initiale du réseau de communication, sont préréglés sur le deuxième état (OFF).

7. Procédé selon l'une des revendications 1 à 6, dans lequel le premier drapeau d'un noeud de réseau (M5) passe au premier état (ON) lorsque le noeud de réseau envoie un message de réponse de routage (RWN) au noeud de réseau racine (R) avant d'envoyer le premier paquet de données (D1) d'une communication de données au noeud de réseau racine (R).

8. Procédé selon l'une des revendications 1 à 7, dans lequel le message de réponse de routage (RWN) est envoyé au noeud de réseau racine (R) directement après la réception du message de requête de routage (RAN).

9. Procédé selon l'une des revendications 1 à 7, dans lequel le message de réponse de routage (RWN) est envoyé au noeud de réseau racine (R) avec un retard temporel après la réception du message de requête de routage (RAN).

10. Procédé selon l'une des revendications 1 à 9, dans lequel les premiers drapeaux des noeuds de réseau (M1-M7), dans le cas d'une initialisation initiale du réseau de communication, sont préréglés sur le deuxième état (OFF).

11. Procédé selon l'une des revendications 1 à 10, dans lequel un paramètre « lifetime » d'un message de réponse de routage (RWN), lequel paramètre code la durée de vie d'un deuxième chemin unidirectionnel de transmission de données vers un noeud de réseau, est réglé sur un paramètre « lifetime » contenu dans le message de requête de routage (RAN) reçu et codant la durée de vie d'un premier chemin unidirectionnel de transmission de données vers le noeud de réseau racine (R).

12. Procédé selon l'une des revendications 1 à 11, lequel se base sur le protocole de routage hybride HWMP.

13. Procédé pour établir un chemin bidirectionnel de transmission de données dans un réseau maillé de communication sans fil par commutation de paquets avec une pluralité de noeuds de réseau dont un sert de noeud de réseau racine, le réseau de communication étant tel que :
- une topologie logique en forme d'au moins une arborescence de routage y est aménagée de manière proactive par le fait que le noeud de réseau racine (R) de l'arborescence de routage envoie à intervalles périodiques des messages de requête de routage (RANs) aux noeuds de réseau (M1-M7) du réseau de communication, les messages de requête de routage spécifiant de premiers chemins unidirectionnels de transmission de données vers le noeud de réseau racine (R) ;
- respectivement un premier drapeau pouvant passer à deux états différents et servant à commander l'émission d'un message de réponse de routage (RWN) y est implanté dans les noeuds de réseau (M1-M7) de l'arborescence de routage, le premier drapeau d'un noeud de réseau (M5) ne passant à un premier état sélectionnable (ON) que si le noeud de réseau (M5) reçoit, en tant que premier noeud de réseau du réseau de communication sur le chemin de transmission de données vers le noeud de réseau racine (R), un paquet de données (D1) à transmettre au noeud de réseau racine (R) ;
- un noeud de réseau (M5), à la détection d'une modification du premier chemin unidirectionnel de transmission de données vers le noeud de réseau racine (R), envoie un message de réponse de routage (RWN) au noeud de réseau racine (R) lorsque le premier drapeau est passé au premier état (ON), le message de réponse de routage spécifiant un deuxième chemin unidirectionnel de transmission de données vers le noeud de réseau, ce par quoi un chemin bidirectionnel de transmission de données est établi entre le noeud de réseau racine (R) et le noeud de réseau (M5) ; et
- un noeud de réseau n'y émet pas de message de réponse de routage lorsque le premier drapeau est passé à un deuxième état.

14. Réseau maillé de communication sans fil par commutation de paquets, dans lequel les noeuds de réseau (M1-M7) sont aménagés de manière appropriée pour exécuter un procédé selon l'une des revendications 1 à 13.

15. Code de programme lisible par machine pour un noeud de réseau (M1-M7) d'un réseau de communication selon la revendication 14, lequel contient des ordres de commande qui font exécuter au noeud de réseau un procédé selon l'une des revendications 1 à 13.

16. Noeud de réseau (M1-M7) d'un réseau de communication selon la revendication 14, dans lequel est exécuté un code de programme lisible par machine selon la revendication 15.

17. Support de mémoire avec un code de programme lisible par machine selon la revendication 15 stocké dessus.
